(19) Europäisches Patentamt
European Patent Office
Office européen des brevets

(11) **EP 4 772 254 A1**

(12) **EUROPEAN PATENT APPLICATION**
published in accordance with Art. 153(4) EPC

(43) Date of publication:
**08.07.2026 Bulletin 2026/28**

(21) Application number: **24881235.6**

(22) Date of filing: **26.08.2024**

(51) International Patent Classification (IPC):
**A63F 13/77** (2014.01)     **H04L 45/121** (2022.01)
**H04L 45/302** (2022.01)

(52) Cooperative Patent Classification (CPC):
**H04L 65/65; H04L 45/121; H04L 45/302**

(86) International application number:
**PCT/CN2024/114532**

(87) International publication number:
**WO 2025/086867 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.10.2023 CN 202311423625**

(71) Applicant: **Tencent Technology (Shenzhen)
Company Limited
Shenzhen, Guangdong 518057 (CN)**

(72) Inventors:
• **WANG, Tingfeng
Shenzhen, Guangdong 518057 (CN)**
• **WEN, Nian
Shenzhen, Guangdong 518057 (CN)**
• **LIU, Honghao
Shenzhen, Guangdong 518057 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **DATA FRAME TRANSMISSION METHOD, DATA FRAME TRANSMISSION APPARATUS, STORAGE MEDIUM, COMPUTER PROGRAM PRODUCT AND ELECTRONIC DEVICE**

(57)     The present application provides a data frame transmission method and apparatus, a storage medium and an electronic device. The method comprises: during the process of a sending device sending a target data frame to a receiving device by means of a first path, obtaining a transmission duration of the target data frame; determining a first duration threshold on the basis of a first group of state probabilities and a first group of lag condition probabilities; and when the transmission duration of the target data frame is greater than or equal to the first duration threshold, the sending device re-sending the target data frame to the receiving device by means of a second path, wherein the second path is a standby path of the first path.

FIG. 4

**Description**

RELATED APPLICATION

This application is based on and claims priority to Chinese Patent Application No. 202311423625.4, filed on October 27, 2023, which is incorporated by reference in its entirety.

FIELD OF THE TECHNOLOGY

This application relates to the field of computer technologies, and in particular, to a data frame transmission method, a data frame transmission apparatus, a storage medium, a computer program product, and an electronic device.

BACKGROUND OF THE DISCLOSURE

In a real-time streaming media application program, such as cloud gaming, data frames (such as video data frames) of the game are needed to be transmitted to a client in real time during gameplay. Therefore, for a good game experience, to avoid severely affecting user experience caused by frequent stall of the game due to long tail delay, transmission of the data frames needs to keep a low delay all the time, even at a tail (in a high quantile).
In a wireless fidelity (Wi-Fi, a wireless network technology) network in a mobile scene, it is difficult to achieve a consistent low delay due to fluctuation of the network. At present, a backup cellular path is generally used to relieve the wireless fluctuation impact of a Wi-Fi path. If it is detected that the data frames stall during transmission on the Wi-Fi path, the data frames may be switched to the cellular path for transmission. Because the stall has already occurred at this time, a performance requirement of a consistently low tail delay cannot be satisfied. If the wireless fluctuation impact of the Wi-Fi path needs to be relieved, a large amount of cellular data needs to be consumed to transmit the data frames. However, use of a large amount of cellular data causes large cost for users, which exceeds expectations of the users.
With regard to the above problems, no effective solution has been provided currently.

SUMMARY

Embodiments of this application provide a data frame transmission method, a data frame transmission apparatus, a storage medium, a computer program product, and an electronic device, to at least solve a technical problem that it is difficult to satisfy both a low stall rate and low cost during transmission of data frames.
According to an aspect of an embodiment of this application, a data frame transmission method is provided, and the method is performed by an electronic device, and includes:

acquiring a transmission duration of a target data frame in a process of transmitting, by a transmitting device, the target data frame to a receiving device through a first path;

determining a first duration threshold according to a first group of state probabilities and a first group of stall condition probabilities, the first group of state probabilities including a probability that each transmission state in a first group of transmission states occurs in a first transmission state set, the first group of transmission states including different transmission states in the first transmission state set, the first transmission state set including a transmission state of each data frame in transmitted data frames, the transmitted data frames being data frames transmitted by the transmitting device to the receiving device before the target data frame is transmitted, and the first group of stall condition probabilities including: probabilities that data frames belonging to each transmission state in the first group of transmission states in the transmitted data frames stall; and

retransmitting, in a case that the transmission duration of the target data frame is greater than or equal to the first duration threshold, the target data frame to the receiving device by the transmitting device through a second path, the second path being a backup path of the first path.

According to another aspect of an embodiment of this application, a data frame transmission apparatus is provided, including:

a first acquisition unit, configured to acquire a transmission duration of a target data frame in a process of transmitting, by a transmitting device, the target data frame to a receiving device through a first path;

a first determining unit, configured to determine a first duration threshold according to a first group of state probabilities and a first group of stall condition probabilities, the first group of state probabilities including a probability that each transmission state in a first group of transmission states occurs in a first transmission state set, the first group of transmission states including different transmission states in the first transmission state set, the first transmission state set including a transmission state of each data frame in transmitted data frames, the transmitted data frames being data frames transmitted by the transmitting device to the receiving device before the target data frame is transmitted, and the first group of stall condition probabilities including: probabilities that data frames belonging to each transmission state in the first group of transmission states in the transmitted data frames stall; and

a transmitting unit, configured to retransmit, in a case that the transmission duration of the target data frame is greater than or equal to the first duration threshold, the target data frame to the receiving device by the transmitting device through a second path, the second path being a backup path of the first path.

In some embodiments, an embodiment of this application further provides a computer-readable storage medium having a computer program stored therein, the computer program being configured for implementing the data frame transmission method when running.

In some embodiments, an embodiment of this application further provides a computer program product or a computer program, including computer instructions, the computer instructions being stored in the computer-readable storage medium. A processor of a computer device reads the computer instructions from the computer-readable storage medium and executes the computer instructions, to cause the computer device to perform the data frame transmission method.

In some embodiments, an embodiment of this application further provides an electronic device, including a memory and a processor, the memory having computer programs stored therein, and the processor being configured to implement the data frame transmission method through the computer programs.

In this embodiment of this application, in the process of transmitting the target data frame on the first path, the first group of state probabilities and the first group of stall condition probabilities are obtained according to the transmitted data frames that are transmitted before the target data frame on the first path, where the first group of state probabilities includes a probability that each transmission state in the first group of transmission states occurs in the first transmission state set; the first group of transmission states includes different transmission states in the first transmission state set; the first transmission state set includes the transmission state of each data frame in the transmitted data frames; and the first duration threshold is determined according to the first group of state probabilities and the first group of stall condition probabilities. If the transmission duration of the target data frame is greater than or equal to the first duration threshold, it indicates that a probability that a stall occurs during continuous transmission of the target data frame on the first path is high. In this case, the target data frame may be retransmitted through the second path. In this mode, a single data frame is taken as an object, the transmission duration of the data frame is acquired, and the transmission duration is compared with the first duration threshold, so that the backup second path may be actively configured for retransmitting a data frame that has a high probability of stall during continuous transmission, thereby achieving a purpose of reducing a stall rate. Meanwhile, the second path is only configured for retransmitting the data frame having a transmission duration greater than the first duration threshold. This is equivalent to that a use threshold is set for use of the second path, so that excessive use of the second path may be further prevented while reducing the stall rate. Therefore, a technical effect that transmission of the data frames satisfies both a low stall rate and low cost is achieved, thereby solving a technical problem that it is difficult to satisfy both the low stall rate and the low cost during transmission of the data frames.

BRIEF DESCRIPTION OF THE DRAWINGS

Drawings described herein are configured for providing further understanding of the embodiments of this application and forming a part of this application. Exemplary embodiments of the embodiments of this application and the description thereof are configured for explaining the embodiments of this application, but do not constitute an improper limitation to the embodiments of this application. In the drawings:

FIG. 1 illustrates schematic diagrams of quantile values of video data frame delays at different transmission bit rates in the related art.

FIG. 2 illustrates schematic diagrams of Kolmogorov-Smimov distances and Kullback-Leibler divergences between feature probability distributions of a current minute and last T minutes in game time of each user.

FIG. 3 is a first schematic diagram of an application environment of a data frame transmission method according to an embodiment of this application.

FIG. 4 is a flowchart of a data frame transmission method according to an embodiment of this application.

FIG. 5 is a schematic diagram of a data frame transmission system according to an embodiment of this application.

FIG. 6 is a schematic diagram of a sudden data frame pause lasting for hundreds of milliseconds due to capacity degradation of a Wi-Fi path according to an embodiment of this application.

FIG. 7 is a second schematic diagram of an application environment of a data frame transmission method according to an embodiment of this application.

FIG. 8 is a schematic diagram of a transmission duration and a path duration according to an embodiment of this application.

FIG. 9 illustrates schematic diagrams of performance of running various solutions together with a Salsify congestion control algorithm in a simulation experiment.

FIG. 10 illustrates schematic diagrams of performance of running various solutions together with an SQP congestion control algorithm in a simulation experiment.

FIG. 11 illustrates schematic diagrams of results of real online testing experiments of solutions.

FIG. 12 is a structural block diagram of a data frame transmission apparatus according to an embodiment of this application.

FIG. 13 is a schematic structural diagram of an electronic device according to an embodiment of this application.

FIG. 14 is a structural block diagram of a computer system of an electronic device according to an embodiment of this application.

DESCRIPTION OF EMBODIMENTS

To make a person skilled in the art better understand the solutions in the embodiments of this application, the technical solutions in the embodiments of this application will be clearly and fully described below in combination with the drawings in the embodiments of this application. Apparently, the described embodiments are merely part of the embodiments of this application, not all of the embodiments. Based on the embodiments in the embodiments of this application, all other embodiments obtained by an ordinary person skilled in the art without contributing creative labor are to belong to the protection scope of the embodiments of this application.

The terms such as "first" and "second" in the description and claims as well as the drawings in the embodiments of this application are configured for distinguishing analogous objects rather than configured for describing a special order or precedence order. Such data may be exchanged under appropriate circumstances so that the embodiments in the embodiments of this application described herein may be implemented in the order other than those illustrated or described herein. In addition, terms of "include" and "have" as well as any other variant thereof are intended to cover non-exclusive inclusion. For example, processes, methods, systems, products or devices including a series of steps or units are not limited to those steps or units clearly listed, but may include other steps or units that are not listed clearly or are inherent to these processes, methods, products or devices.

First, some nouns or terms that appear during description of the embodiments of this application are applicable to the following explanations:

Long tail delay: refers to a phenomenon that some of delay values exceeding an average value are relatively long in a communication system. In high quantiles (such as quantile of order 99 and quantile of order 999), the delay values are further increased, and these delay values are referred to as long tail delays. Quantiles are concepts configured for describing data distribution in statistics. In the field of communication, common quantiles include medians, quartiles, and percentiles. Taking the percentiles as an example, for example, a 99 quantile indicates that 99% of delay values are less than or equal to this value. That is, only 1% of delay values are greater than the 99 quantile, and these delay values are usually considered as long tail delays.

Linear programming: refers to a mathematical theory and method for studying an extremum problem of a linear target function under a linear constraint condition, where integer linear programming (ILP) refers to integer linear programming in which all decision variables need to take integer values.

Transport protocol: refers to a protocol configured for transmitting data on a transport layer. At present, there are multiple different transmission protocols, and the transmission protocols have different transmission packet formats and transmission capabilities.

Congestion control algorithm (CCA): is a network algorithm configured for preventing excessive data from being injected into a network and avoiding a situation of excessive network load.

Round trip time (RTT): refers to a duration consumed for a round trip of data transmission on a network.

Retransmit time out (RTO) mechanism: refers to a mechanism for data retransmission, i.e., from the moment of data transmission, if the time exceeds a pre-configured time, retransmission is performed.

Acknowledgement character (ACK): is a transmission type control character transmitted to a transmitting device by a receiving device during data communication, and is configured for indicating that transmitted data has been acknowledged to be received without errors.

Congestion window (CWND): is a transmission control protocol (TCP) state variable, and is configured for controlling a data volume that may be transmitted to a network before an acknowledgement is received.

Multi-channel method: a plurality of transmission channels (paths for transmitting data) are established between a client and a server, and data may be transmitted through a network on the plurality of channels.

Multipath scheduler: in a multi-channel method, a scheduler determines a channel through which data is transmitted to a client.

Transmission connection: refers to a connection acknowledged to be established on both ends from end to end on a transport layer. Transmission connection is a basic guarantee for reliability of data transmission, for example, a TCP connection.

Internet service provider (ISP): refers to a telecommunication operator that comprehensively provides an Internet access service, an information service, and a value-added service for a wide range of users.

The data frame transmission method has a wide range of application scenes. In the following embodiments of this application, the data frame transmission method is described with an example in which a Wi-Fi path is configured as a first path and a cellular path is configured as a second path, and specific forms of the first path and the second path are not limited. For example, the first path and the second path may alternatively be: a wired path, a Bluetooth path, an infrared path, a blue-ray path, a virtual path, and the like.

To better understand differences between the data frame transmission method provided in the embodiments of this application and the related art, the related art is further introduced and described below.

As mentioned above, achieving low delay for mobile real-time streaming media is a common objective pursued in the field of real-time streaming media. At present, solutions for achieving the objective of low delay of mobile real-time streaming media are as follows:

Solution 1): Congestion control solution: In real-time streaming media, a most widely used solution for reducing a data frame transmission delay is to use a complex CCA. The CCA reduces a congestion situation in a network by adjusting a data volume transmitted to the network, to obtain a low delay. However, when a Wi-Fi network on a mobile end randomly fluctuates, it is difficult to obtain a low long tail delay.

Solution 2) Multi-channel solution in the related art: A Wi-Fi path and a cellular path are configured for reducing the data frame transmission delay. However, from aspects such as actual properties of the solution, cellular cost of the solution, and solution deployability, it is difficult to widely deploy the multi-channel solution in the related art, and it is also impossible to satisfy a property requirement of a consistent low tail delay. Reasons are as follows:

Reason i) Actual properties of the solution: In the multi-channel solution in the related art, a multipath scheduler makes a decision only when a data packet leaves, and leaves retransmission (another transmission) of the data packet to an underlying loss recovery mechanism. Therefore, when there is RTT fluctuation in the Wi-Fi path, transmission of the data packet is inevitably delayed. Therefore, the property requirement of a consistent low tail delay cannot be satisfied.

Reason ii) Cellular cost of the solution: In the multi-channel solution in the related art, only properties of a plurality of paths are concerned. To avoid as much as possible a long tail delay caused by RTT fluctuation of a data frame on the Wi-Fi path, the cellular path is massively configured for replacing the Wi-Fi path for transmission of the data frame, and a cellular data budget condition for the cellular path is ignored. At present, a data budget for cellular connection provided by the ISP is limited. In addition, different from a periodic charging mode of the Wi-Fi path, the cost of the cellular path is directly related to the use amount of the cellular data. Users express strong concern about the use amount of the cellular data. Therefore, from the perspective of the cellular cost of the solution, the multi-channel solution that consumes a large amount of cellular data is not applicable to wide deployment.

Reason iii) Solution deployability: The multi-channel solution in the related art needs to modify a kernel of user equipment, or make a decision depending on values (such as volume, video sizes, and playback buffer occupation) that do not exist in real-time streaming media. Therefore, the multi-channel solution in the related art cannot be widely deployed in a real-time streaming application program.

Further, the solutions in the related art have the following technical problems:

1. For the congestion control solution:

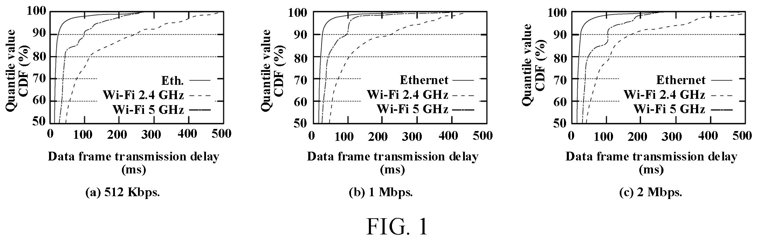

In the real-time streaming media, because there is link fluctuation in the Wi-Fi path, the congestion control algorithm cannot ensure a consistent low delay of a data frame on the Wi-Fi path. The congestion control algorithm is hereinafter referred to as CCA below. A main function of the CCA is to adapt to the capacity change of a transmission path, and reduce a data frame transmitting rate in time to eliminate a queuing delay or a data packet loss to maintain a low transmission delay. However, because the fluctuation of the Wi-Fi path may cause RTT dilation, the Wi-Fi path cannot transmit data in time. Therefore, the long tail delay cannot be solved by deploying the CCA. FIG. 1 illustrates schematic diagrams of quantile values of video data frame delays at different transmission bit rates in the related art. As shown in FIG. 1, the quantile values of the video data frame delays at different transmission bit rates (512 Kbps, 1 Mbps, and 2 Mbps) are researched. Abscissas in FIG. 1 represent the data frame transmission delay (ms), and ordinates represent the quantile value (CDF, %) of the video data frame delays. Taking an example in which video data frames are transmitted by Wi-Fi 5 GHZ, Wi-Fi 2.4 GHZ, and Ethernet (Eth) on a wireless link, the wireless link may force the CCA to maintain an extremely low transmission bit rate which may be lower than a video quality service requirement (i.e., 2 Mbps). Moreover, even if a low transmission bit rate is used, a tail data frame transmission delay is still very high (above 200 ms), and delay distribution is kept consistent at all low bit rates. This highlights that in a fluctuating wireless network, the CCA is unable to reduce a tail delay of a real-time streaming media application program. Therefore, it is valuable to relieve the wireless fluctuation impact of the Wi-Fi path through the cellular path.

2. For the multi-channel solution:

1) The multi-channel solution in the related art cannot achieve a low tail delay. Although many solutions about multipath transmission (i.e., multi-channel solutions) have been provided in the related art, the solutions mainly focus on maximizing a throughput or minimizing a request completion time. Some multipath transmission systems specially designed for delay-sensitive application programs, such as a BLEST system and an RAVEN system, schedule data packet transmission on a plurality of paths, but leave retransmission to an underlying loss recovery mechanism. However, due to highly unpredictable RTT dilation, data packets scheduled on the Wi-Fi path may be seriously delayed before retransmission timeout. Therefore, the systems cannot satisfy a property requirement of a low tail delay. In addition, other systems, such as XLINK, use data packet reinjection to reduce a data frame transmission delay, but they assume that a size of a video block is known, and a playback buffer occupation level is needed as a quality of experience (QoE) signal. This cannot be used in real-time streaming media.

2) When an actual multi-channel solution is deployed, minimizing the use amount of cellular data is crucial. A multipath scheduler, such as RAVEN, specially designed for an interactive application program performs redundant frame transmission through a cellular path, but fails to consider cellular data cost. However, a large amount of bandwidth is consumed in video frame transmission, which may significantly increase the use amount of the cellular data. According to a survey of millions of online users, it is considered that for a practical multi-channel solution, a cellular cost constraint is not to be an accidental concern, but is to be a main design consideration. Therefore, when a multi-channel solution for real-time streaming media is designed, minimizing the use amount of the cellular data is crucial.

3) When the multi-channel solution is deployed, the kernel of the user equipment needs to be modified, and this kernel-based multi-path transmission solution cannot be widely deployed. Many multipath transmission solutions in the related art need to modify the kernel of the user equipment. As a service provider, it is not feasible to modify the user equipment, a network middle box, or customized hardware. Therefore, the solution cannot be widely deployed.

Based on the technical problems existing in the above related art, an embodiment of this application provides a data frame transmission method, which may be applied to a multipath transmission service of mobile real-time streaming media, and may achieve purposes of reducing the long tail delay, minimizing the use amount of the cellular data, and implementing large-scale deployment. In the data frame transmission method provided in this embodiment of this application, a Wi-Fi path is configured as a main path of data frame transmission, and a cellular path is used by introducing a "data frame retransmission strategy" and a "primary path switching strategy". Two technical problems when a plurality of paths are configured for dealing with paths with RTT fluctuation are solved:

Technical problem 1): RTT dilation caused by wireless fluctuation of the Wi-Fi path is highly unpredictable; and

Technical problem 2): The use of the cellular path is strictly limited and is to be minimized.

The two technical problems make it difficult to determine when to use the cellular path to relieve the impact of RTT dilation.

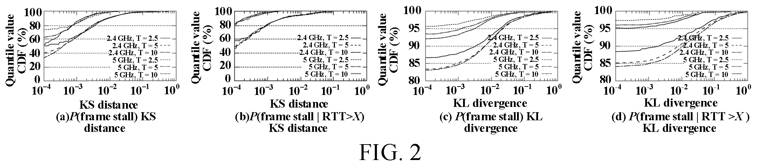

To solve these technical problems, Kolmogorov-Smirnov (KS) distances and Kullback-Leibler (KL) divergences between feature probability distributions of a current minute and last T minutes in game time of each user in a large quantity of users are collected. FIG. 2 illustrates schematic diagrams of KS distances and KL divergences between feature probability distributions of a current minute and last T minutes in game time of each user. As shown in FIG. 2, stall rates and delays of data frames of different users are greatly different, but remain stable for a single user within a particular time. Based on this rule, in the data frame transmission method provided in this embodiment of this application, statistical data of user sessions is classified into different transmission states, and a session probability model is created for each user to quantify features of various networks. Then, balance of reducing the delays and limiting the use amount of the cellular data is programmed through the ILP problem, and state probability models are used as inputs. By solving the ILP problem, in the data frame transmission method provided in this embodiment of this application, an appropriate time point is determined to use the cellular path, to achieve the purposes of satisfying the property requirement of a consistent low delay and minimizing the cost of cellular utilization. To achieve a requirement of deployability, the data frame transmission method provided in this embodiment of this application may be completely implemented in an edge server without modifying the kernel of the user equipment, the customized hardware, or the network.

Related information (including, but not limited to, user equipment information, user personal information, and the like) and data (including, but not limited to, data for display, analyzed data, and the like) involved in the embodiments of this application are information and data that are authorized by a user or fully authorized by all parties. For example, an interface is provided between the system and a related user or institution. Before related information is acquired, an acquisition request needs to be transmitted to the user or the institution through the interface, and the related information is acquired after consent information fed back by the user or the institution is received.

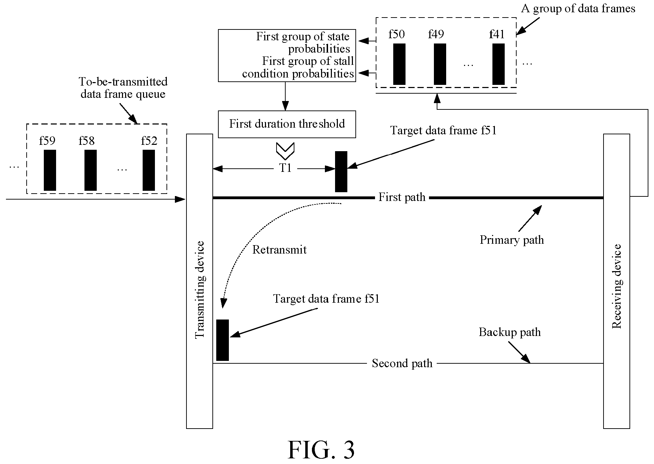

An embodiment of this application provides a data frame transmission method. In some embodiments, the data frame transmission method may be applied to, but not limited to, a device such as a terminal device or a server. A data frame transmission method applied to the terminal device is taken as an example for explanation and description. FIG. 3 is a first schematic diagram of an application environment of a data frame transmission method according to an embodiment of this application. As shown in FIG. 3, the above process of using the cellular path by citing the "data frame retransmission strategy" is presented, where a target data frame f51 is a data frame that is currently being transmitted on a first path (a main path, for example, a Wi-Fi path) between the transmitting device and the receiving device; the transmission duration of f51 is T1; and the transmitted data frames (f41 to f50) are data frames transmitted by the transmitting device to the receiving device before the target data frame is transmitted. A first group of state probabilities and a first group of stall condition probabilities are obtained according to the transmission state of each data frame of the transmitted data frames, and a first duration threshold is determined according to the first group of state probabilities and the first group of stall condition probabilities. The transmission duration T1 of f51 is compared with the first duration threshold. When T1 is greater than or equal to the first duration threshold, f51 is retransmitted (transmitted again) through a second path (a backup path, such as a cellular path) between the transmitting device and the receiving device. The above process presents the "data frame transmission strategy" in the data frame transmission method, and an acting object of the strategy is a single data frame. After f51, a to-be-transmitted data frame queue further includes data frames (f52,... f58, f59,...) not transmitted currently. Each data frame is, for example, transmitted through a first path (a main path, such as a Wi-Fi path). The above "data frame retransmission strategy" is performed on each data frame, to determine whether the second path (the backup path, such as the cellular path) is required for retransmission.

In the above mode, by taking a single data frame as an object, the first duration threshold is obtained according to the transmitted data frames which are transmitted before the data frame, and the transmission duration of each data frame is compared with the first duration threshold. When the transmission duration is greater than or equal to the first duration threshold, a stall event may occur in the data frame. The backup second path is used in time for retransmitting the data frame, thereby reducing a stall rate during data frame transmission. Meanwhile, the first duration threshold also sets a definite threshold for utilization of the second path, thereby reducing the utilization of the second path and reducing the cellular cost of data frame transmission.

In this embodiment of this application, the terminal device may be a terminal device configured with a target client and may include, but is not limited to, at least one of the following: a mobile phone (such as Android phones, and iOS phones), a laptop, a tablet computer, a personal digital assistant, a mobile Internet device (MID), a portable apple device (PAD), a desktop computer, and a smart television. The target client may be a video client, an instant messaging client, a browser client, or an education client. The network may include, but is not limited to, a wired network and a wireless network, where the wired network includes: a local area network, a metropolitan area network, and a wide area network. The wireless network includes: Bluetooth, a Wi-Fi, and other networks implementing wireless communication. The server may be one server, a server cluster composed of a plurality of servers, or a cloud server. The above is merely an example, which is not limited in this embodiment of this application.

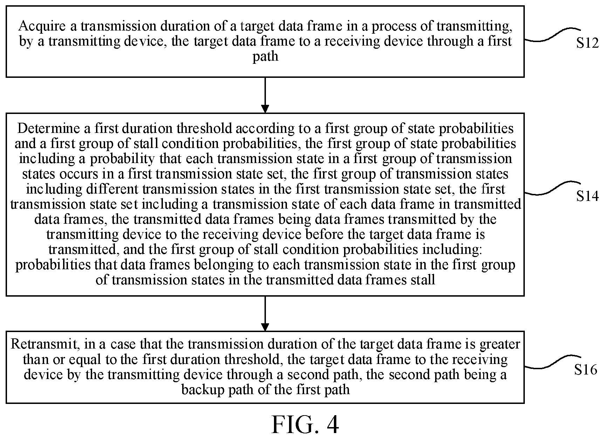

In some embodiments, FIG. 4 is a flowchart of a data frame transmission method according to an embodiment of this application. As shown in FIG. 4, the above data frame transmission method includes:

Operation S12: Acquire a transmission duration of a target data frame in a process of transmitting, by a transmitting device, the target data frame to a receiving device through a first path.

In this embodiment of this application, the transmitting device is a transmitting end of the target data frame; the target data frame is transmitted by the transmitting device and received by the receiving device; and the receiving device is a receiving end of the target data frame. Taking cloud gaming as an example, the transmitting device may be a game server, and the receiving device may be a user terminal, such as a personal computer or a mobile phone.

In this embodiment of this application, the first path may be a main path for transmitting the data frames between the transmitting device and the receiving device. In most cases, the data frames are transmitted through the first path. The first path may be a Wi-Fi path. The Wi-Fi path has a characteristic of periodic charging, which allows unlimited use of broadband resources within a period of time after payment. Meanwhile, another characteristic of the Wi-Fi path is wireless fluctuation, which may cause RTT dilation. An embodiment of this application provides a transmission solution for a possible stall during transmission of the target data frame on the first path. A multi-channel transmission solution is used. One or more backup paths are provided for the first path. When a stall may occur during the transmission of the target data frame on the first path, a backup second path (described below) is configured for transmitting the target data frame, to reduce the stall rate of the data frame.

In this embodiment of this application, the target data frame is a data frame that is currently being transmitted on the first path. Apparently, the target data frame has not been transmitted to the receiving device. This application aims to predict, according to a current transmission duration of the target data frame, a possibility that a stall event occurs when the target data frame continues to be transmitted through the first path, and retransmit the target data frame in time through the second path when predicting that the stall may occur in the target data frame, to avoid a data frame transmission stall. Different from the related art in which a path is passively switched to transmit the data frame only after the stall occurs in the data frame, the data frame transmission method provided in this embodiment of this application is a method of advance prediction. The probability of the stall is actively predicted according to the transmission duration of the target data frame, and a dealing means is made in advance, thereby greatly reducing the probability that users perceive the stall and improving the user experience.

Operation S14: Determine a first duration threshold according to a first group of state probabilities and a first group of stall condition probabilities, the first group of state probabilities including a probability that each transmission state in a first group of transmission states occurs in a first transmission state set, the first group of transmission states including different transmission states in the first transmission state set, the first transmission state set including a transmission state of each data frame in transmitted data frames, the transmitted data frames being data frames transmitted by the transmitting device to the receiving device before the target data frame is transmitted, and the first group of stall condition probabilities including: probabilities that data frames belonging to each transmission state in the first group of transmission states in the transmitted data frames stall.

In this embodiment of this application, taking an example in which a target data frame is f51 and the transmitted data frames are f41 to f50, as shown in Table 1 below, a transmission state of each data frame, and whether stall occurs in each data frame are recorded, where the transmission state may be any parameter that may reflect a transmission delay of a single data frame in a transmission process of the data frame, such as a data frame transmission delay and a data frame transmission duration. In Table 1, an example in which the transmission duration of each data frame is configured as a transmission state is taken. For example, the transmission duration of f41 is 120 ms, and no stall occurs; and the transmission duration of f45 is 240 ms, and a stall occurs.

Table 1

| Data frame | Transmission state | Whether transmission stalls |
|---|---|---|
| f41 | S41 (120 ms) | No |
| f42 | S42 (120 ms) | No |
| f43 | S43 (130 ms) | No |
| f44 | S44 (120 ms) | No |
| f45 | S45 (240 ms) | Yes |
| f46 | S46 (240 ms) | Yes |
| f47 | S47 (130 ms) | No |
| f48 | S48 (120 ms) | No |
| f49 | S49 (240 ms) | Yes |

(continued)

| Data frame | Transmission state | Whether transmission stalls |
|---|---|---|
| F50 | S50 (120 ms) | No |

According to the data recorded in Table 1, the first transmission state set includes the transmission state of each data frame of the transmitted data frames, i.e., the first transmission state set is (120 ms, 120 ms, 130 ms, 120 ms, 240 ms, 240 ms, 130 ms, 120 ms, 240 ms, 120 ms). The first group of transmission states includes different transmission states in the first transmission state set. For example, S41, S42, S44, S48, and S50 are 120 ms, and may be grouped into a transmission state $S_1$. S43 and S47 are both 130 ms, and may be grouped into a transmission state $S_2$. S45, S46, and S49 are 240 ms, and may be grouped into a transmission state $S_3$. Therefore, the first group of transmission states includes: $S_1$, $S_2$, and $S_3$, and values are sequentially 120 ms, 130 ms, and 240 ms. The first group of state probabilities includes $P(S_1)$, $P(S_2)$, and $P(S_3)$. The first group of stall condition probabilities includes $P(stall|S_1)$, $P(stall|S_2)$, and $P(stall|S_3)$. Further, the first duration threshold is determined according to the first group of state probabilities and the first group of stall condition probabilities. A specific calculation mode will be described below.

Operation S16: Retransmit, in a case that the transmission duration of the target data frame is greater than or equal to the first duration threshold, the target data frame to the receiving device by the transmitting device through a second path, the second path being a backup path of the first path.

In this embodiment of this application, the second path is the backup path of the first path. The mentioned first path may be a Wi-Fi path. A characteristic of the Wi-Fi path is periodic charging, and a broadband resource is used in an unlimited amount within a period of time after payment. Meanwhile, another characteristic of the Wi-Fi path is wireless fluctuation, which may cause RTT dilation. The second path herein may be a cellular path. A characteristic of the cellular path is charging according to a used amount of cellular data, i.e., the more data is used, the higher the cost. Meanwhile, another characteristic of the cellular path is stable transmission, and may be used as the backup path of the first path.

In this embodiment of this application, switching on the second path is limited based on a relationship between the transmission duration of the target data frame and the first duration threshold, so as to avoid massive use of the second path while reducing a stall rate, thereby reducing cost consumption caused by use of the backup path (the cellular path).

To better understand specific solutions recorded in the embodiments, before a specific description of the following embodiments is started, a design objective of a data frame transmission method provided in an embodiment of this application is first described:

A concept used by the data frame transmission method provided in this embodiment of this application is using the Wi-Fi path (equivalent to the foregoing first path) as a main path of data frame transmission in real-time streaming media, and using the cellular path (equivalent to the foregoing second path) as the backup path when a connection of the Wi-Fi path suffers wireless fluctuation. The data frame transmission method provided in this embodiment of this application aims to achieve the following objectives:

Objective 1): Reduce a long tail delay caused by wireless fluctuation. As described above, the long tail delay, such as RTT dilation, caused by wireless fluctuation of the Wi-Fi path is an inherent problem of the Wi-Fi path. Therefore, using the cellular path to transmit a data flow is also valuable. However, because the RTT dilation of the Wi-Fi path is highly unpredictable, determining an occasion of using another path is challenging. If a use occasion of the second path is unreasonable, not only the problem of the long tail delay cannot be solved, but also a large quantity of second path transmission resources are wasted.

Objective 2): Limit the use amount of cellular data in a cellular path. An intuitive method of using a redundant path (i.e., the first path and the second path are redundant to each other) is copying, on the cellular path, all data frames transmitted on the Wi-Fi path. This mode may maximally ensure that a stall rate of data frame transmission is minimum. However, a large amount of cellular data is consumed, and a constraint of a user on cellular data consumption on the cellular path is violated. In addition, due to a significant imbalance of path capacities, the cellular path may not process additional traffic from copying all frames, and forcibly copying all the data frames transmitted on the Wi-Fi path to the cellular path may overload a cellular buffer of the cellular path. Therefore, the data frame transmission method in this embodiment of this application can limit use of the cellular path for the above scene.

Objective 3: Implement large-scale deployment. A real-time streaming media platform provides services for millions of users, and these users use various device models, operating systems, and Wi-Fi AP models. As a streaming media service provider, in a multi-channel transmission solution in the related art, it is not feasible to modify the kernel of the user equipment, a network middle box, or customized hardware. For actual deployment on a large scale, in the data frame transmission method in this embodiment of this application, a game server and a user application program are modified, and a user hardware device is not modified.

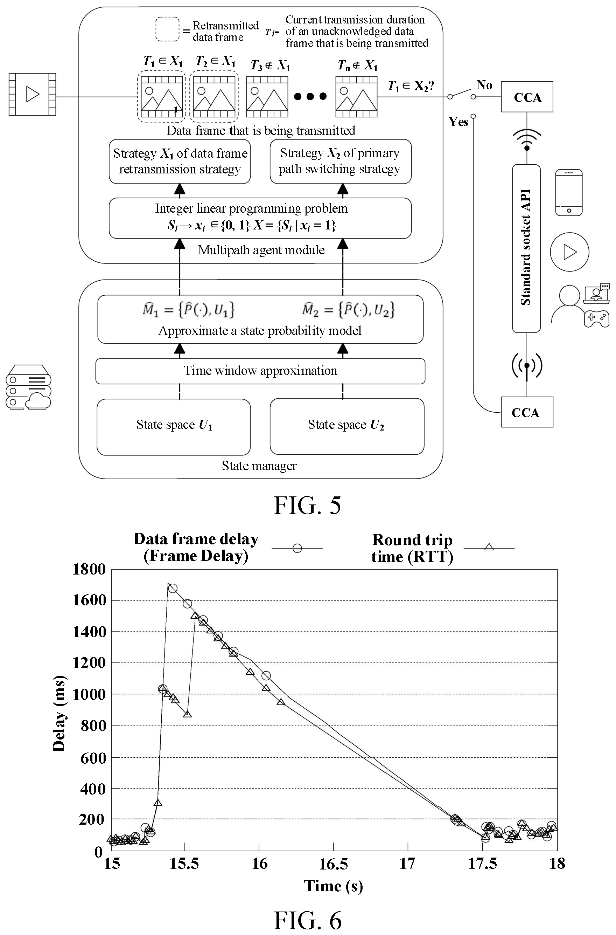

Based on the above three objectives, an embodiment of this application provides a data frame transmission system. FIG. 5 is a schematic diagram of a data frame transmission system according to an embodiment of this application.

As shown in FIG. 5, to achieve a purpose of reducing a long tail delay by using a cellular path while complying with strict cellular data use limitations, first, a session probability model of each user is derived by observing features of a network, to capture the features of each user. Then, the balance between tail delay reduction and cellular cost minimization is converted into an integer linear programming (ILP) problem. A use occasion for using the cellular path is determined by solving the ILP problem by using a measured probability model as an input. As a multipath transmission service solution, the cellular path is used through two strategies:

Strategy 1): a data frame retransmission strategy configured for detecting an in-flight data frame (which may be understood as the target data frame) transmitted on the Wi-Fi path, and retransmitting, in time, a data frame that may be seriously delayed on the Wi-Fi path; and

Strategy 2): a primary path switching strategy. In a case that the capacity of the Wi-Fi path is seriously decreased, in this strategy, a primary path (i.e., the main path) may be temporarily switched from the Wi-Fi path to the cellular path, and all newly generated data frames are transmitted through the cellular path. As shown in FIG. 5, the data frame transmission system includes two main assemblies: a state manager and a multipath agent module, where the state manager is configured to detect capacities of the Wi-Fi path and the cellular path and approximate a state probability model for each user, where the approximated state probability models include: $\hat{M}_1 = \{P(\cdot), U_1\}$ and $\hat{M}_2 = \{\hat{P}(\cdot), U_2\}$. A state probability model $\hat{M}_1$ corresponds to the above data frame retransmission strategy. A state probability model $\hat{M}_2$ corresponds to the above primary path switching strategy. The state probability models will be described in detail below. Based on state probability models $\hat{M}_1$ and $\hat{M}_2$ provided by the state manager, the multipath Agent module continuously solves the established ILP problem to acquire a strategy $X_1$ of the data frame retransmission strategy and a strategy $X_2$ of the primary path switching strategy, and performs data frame retransmission and path switching. As shown in FIG. 5, after the strategy $X_1$ of the data frame retransmission strategy and the strategy $X_2$ of the primary path switching strategy are determined, a current transmission duration of an unacknowledged data frame that is being transmitted (unacked frame in-flight time $T_i$) is acquired. The data frame retransmission strategy is configured for determining whether $T_i$ of each data frame belongs to $X_1$. For example, transmission durations $T_1$ and $T_2$ belong to $X_1$, so the corresponding data frame is a retransmitted data frame, and the retransmitted data frame is retransmitted through the second path. Meanwhile, the primary path switching strategy is further configured for determining whether $T_1$ belongs to $X_2$. In a case that $T_1$ belongs to $X_2$, the primary path is temporarily switched from the Wi-Fi path to the cellular path.

The state probability models are described in detail below:

In a real-time streaming media session, the transmitting device and the receiving device communicate on a network path (the Wi-Fi path or the cellular path) along a time axis. The transmitting device continuously transmits data frames, such as video data frames, to the receiving device. Meanwhile, the receiving device provides feedback (ACK) for arrival of the data frames or a particular time interval. Then, the transmitting device may derive some statistics information based on the feedback (for example, the RTT or an acknowledgement byte). To efficiently use the statistical information and extract key information for determining a transmission mode by the transmitting device, the data frames are divided into a plurality of transmission states. For example, for the transmitted data frames (f41, f42, f43, f44, f45, f46, f47, f48, f49, and F50) in Table 1, each data frame corresponds to one transmission state $S_i$ (e.g., a transmission state corresponding to f4l is $S_{41}$, which belongs to $S_1$ in the above first group of transmission states). All different transmission states in the transmitted data frames are used as a first group of transmission states $U = \{S_j\}, \forall i \neq j, S_i \cap S_j = \emptyset$. For example, if the transmitting device chooses to use (RTT, and bandwidth) as a transmission state, U is two-dimensional space and each point in the space represents a transmission state. For each session, because features of networks are greatly different, state probability distribution $P(S_i)$ may be significantly different.

When the receiving device encounters a data frame stall, a next feedback may carry information about a stall event, so that the transmitting device can record the stall. If the stall is defined as a stall event in all states of the session, an overall data frame stall probability of the user session is shown in formula (1):

$$P(stall) = P(stall, U) = \sum_{S_i \in U} P(stall, S_i) = \sum_{S_i \in U} P(stall|S_i)P(S_i) \quad (1)$$

Where the probability distributions of $P(stall)$, $P(stall|S_i)$, and $P(S_i)$ may reflect a situation related to the receiving device and a network condition in a given user session. A state probability model of the user session (which may be understood as a data frame transmission process) is defined as: $M = \{P(stall), P(stall|S_i), P(S_i)\}, S_i \in U$; a relationship of these probability distributions is given by formula (1), where when $U = U_1, M = \hat{M}_1$; and when $U = U_2, M = \hat{M}_2$. $U_1$ is a state space of the state probability model $\hat{M}_1$, and $U_2$ is a state space of the state probability model $\hat{M}_2$ (described below). $M$ is acquired to capture and quantify features of a network of the user session.

Based on the state probability models, backup path utilization strategies (including: the strategies of the data frame retransmission strategy and the strategies of the primary path switching strategy) are described in detail below:

To reduce the long tail delay and the frame pause of the primary path, the transmitting device may use the backup path (i.e., the second path, the cellular path) to perform data frame transmission. The strategy $X_1$ of the data frame retransmission strategy and the strategy $X_2$ of the primary path switching strategy determine when the backup path is to be used. Ideally, the backup path is to be used only when a data frame may be delayed on the primary path (i.e., the second path, the Wi-Fi path). However, before the data frame is acknowledged by the receiving device, it is difficult to accurately predict whether the data frame is delayed and paused. To efficiently use the backup path, in the data frame transmission method provided in this embodiment of this application, a problem of deriving an optimal utilization strategy is decomposed into two tasks:

Task 1): Cover a delayed data frame caused by wireless fluctuation. The backup path utilization strategies (including: the strategies of the data frame retransmission strategy and the strategies of the primary path switching strategy) are to ensure that a data frame that may be delayed is covered by using the backup path as much as possible, thereby minimizing a false negative (FN) rate of decisions of backup path utilization, where a larger case in which the data frame actually stalls, but it is determined, based on the backup path utilization strategies, that the data frame does not use the backup path indicates a higher false negative rate. The false negative rate is a proportion of incorrectly predicting a positive sample as a negative sample. In this embodiment of this application, the false negative rate refers to a proportion that a data frame is to use the backup path (a positive sample) during an actual stall, but is predicted not to use the backup path (a negative sample).

Task 2): Reduce utilization of the backup path. The backup path is to be used only when necessary, because excessive use of the backup path may cause additional data use and negative impact (for example, increased cost of cellular data). The backup path utilization strategies are to be aimed at minimizing the false positive (FP) rate of decision, where a larger case in which the data frame actually does not stall, but it is determined, based on the backup path utilization strategies, that the data frame uses the backup path indicates a higher false negative rate. The false positive rate is a proportion of negative samples in samples having prediction results of positive samples. In this embodiment of this application, the false positive rate refers to a proportion that the data frame does not need to use the backup path (the negative samples) without stall, but is predicted to use the backup path (the positive samples) during an actual stall.

As described in the above "detailed description of the state probability models", the statistical data of the data frames of the transmitting device in a real-time streaming media process is divided into different transmission states. These transmission states are used as decision points (deciding whether to perform data frame retransmission and primary path switching). For each transmission state $S_i$, $x_i$ is configured for indicating whether the backup path is to be used for data frame transmission to alleviate a data frame transfer delay on the first path, where $x_i = 1$ indicates a positive decision, which uses the backup path to perform data frame transmission; and $x_i = 0$ indicates a negative decision, which does not use the backup path to perform data frame transmission. The strategy refers to selecting, from $U$, a plurality of transmission states $S_i$, where the selected transmission states are represented as: $X = \{S_i \in U | x_i = 1\}$, and remaining states are represented as $\overline{X} = \{S_i \in U | x_i = 0\}$. Next, according to the state probability model $M(\hat{M}_1$ and $\hat{M}_2)$, an optimal backup path utilization strategy $X(X_1$ and $X_2)$ is derived.

To implement the above task 1), the false negative rate of the strategy X is shown as formula (2):

$$\mathrm{P}(FN) = \mathrm{P}(\overline{X}|\text{stall}) = \frac{P(stall, \overline{X})}{P(stall)} = \frac{P(stall) - P(stall, X)}{P(stall)} = \frac{P(stall) - \sum_{S_i \in X} P(stall, S_i)}{P(stall)}$$

$$= \frac{P(stall) - \sum_{S_i \in X} P(stall|S_i)P(S_i)}{P(stall)} \quad (2)$$

As shown in FIG. 5, a stall rate of a single user session generally keeps stable within a time window approximation. Therefore, it is assumed that within a particular time, an overall frame stall probability $P(stall)$ is a constant value.

In this case, a minimum $P(FN)$ is changed to a maximum function $f(X)$, as shown in formula (3):

$$f(X) = \sum_{S_i \in X} P(stall|S_i)P(S_i) \quad (3).$$

The maximum function $f(X)$ implicitly assumes that the capacity of the backup path is sufficient to alleviate the long tail delay, but this does not always hold (for example, the capacity of the backup path is insufficient to transmit a current data frame). Therefore, $P_{backup}(S_i)$ is introduced to indicate a probability that the backup path satisfies a condition for performing data frame transmission in a transmission state $S_i$ (a determining mode of $P_{backup}(S_i)$ will be described below). Based on this, the maximum function in formula 3 is modified as shown in formula (4):

$$F(X) = \sum_{S_i \in X} P(stall|S_i)P(S_i)P_{backup}(S_i) \quad (4)$$

To implement the above task 2), a false positive rate of strategy X is defined as shown in formula (5):

$$P(FN) = P(X|!\,stall) = \frac{P(X,!\,stall)}{P(!\,stall)} = \frac{P(X) - P(X, stall)}{1 - P(stall)} = \frac{P(X) - f(X)}{1 - P(stall)} \quad (5)$$

It is considered that a main objective of the task 1) is to maximize $f(X)$ in a case that $P(stall)$ is assumed to be a constant value, and an objective of the task 2) is to minimize $P(FP)$ by limiting a value of $P(X)$ below a particular threshold. The threshold indicates a data (cellular data) use limitation of the backup path, and is to adapt to different specified budgets. Therefore, the backup path utilization rate is limited to be less than or equal to a frame stall rate multiplied by a parameter $\delta$, as shown in formula (6):

$$P(X) = \sum_{S_i \in X} P(S_i) \le \sum_{S_i \in X} P(stall|S_i)P(S_i) \cdot \delta \quad (6)$$

Through the maximum function $F(X)$ (formula 4), the constraint condition (formula 6), and the state probability models $M$ ($\hat{M}_1$ and $\hat{M}_2$), a problem of determining the backup path utilization strategy may be converted into the ILP problem, as shown in the following formula (7):

$$\begin{cases} \text{Maximize} \sum_{S_i \in X} P(stall|S_i)P(S_i)P_{backup}(S_i)x_i \\ \qquad\qquad\qquad x_i = 0,1 \qquad\qquad (7) \\ \text{Subject to} \sum_{S_i \in X} P(S_i) \le \sum_{S_i \in X} P(stall|S_i)P(S_i) \end{cases}$$

In the formula (7), a maximum item is intended to achieve the objective of the task 1), i.e., to cover the delayed data frame caused by wireless fluctuation, and a constraint item is intended to achieve the objective of the task 2), i.e., to minimize data use of the backup path. By solving the ILP, the transmitting device may obtain the strategy X ($X_1$ and $X_2$), and determine when to use the backup path.

The multipath agent module in FIG. 5 plays a key role in determining whether to retransmit a data frame that is being transmitted on the cellular path and whether to switch the primary path from the Wi-Fi path to the cellular path. To make these decisions, the multipath agent module uses the state probability models $M$ ($\hat{M}_1$ and $\hat{M}_2$) provided by the state manager, and inserts the models into the ILP problem described in formula (7). An output based on the ILP problem is the strategies X ($X_1$ and $X_2$), and the multipath agent module obtains decisions required for reducing the long tail delay and minimizing cellular cost.

In a multi-channel solution of the related art, a multipath scheduler generally determines only a transmission path to be configured for transmitting new data when a data packet leaves. However, unpredictable RTT dilation of the Wi-Fi path may seriously delay a planned data packet. Therefore, to reduce the long tail delay, it is very important to detect a data frame that is being transmitted and actively retransmit the data frame when the data frame faces a high delay possibility.

To eliminate a tail delay as much as possible, in the data frame transmission method provided in this embodiment of this application, retransmission of application layer data frames is introduced. The data frame may be transmitted on the first path, and when a high delay possibility occurs, the data frame that is being transmitted is immediately retransmitted on the cellular path to avoid the delay. Retransmission of an entire data frame instead of a data packet is selected because according to interdependency of an encoder and a decoder, a video data frame needs to be completely transmitted to the decoder to prevent video quality from being reduced, and any delayed data packet in the video data frame may finally increase a delay of the data frame. Certainly, there is a strong relationship between the transmission duration of an unacknowledged data frame and the probability of severe delay of the data frame. The relationship is quantified by the state probability model $\hat{M}_1$, which uses the transmission duration of the data frame as a state space $U_1$ thereof. Therefore, as the state manager continuously updates the probability model $\hat{M}_1$ in a streaming media process, the multipath agent module continuously uses $\hat{M}_1$ as an input to solve the ILP problem and obtain a decision $X_1$. A timer of the multipath agent module continuously detects all unacknowledged data frames and retransmits those data frames (i.e., $T_f = S_i \in X_1$) having a transmission duration of $T_f$ matching $X_1$, where the transmission duration $T_f$ is equivalent to the transmission duration of the target data frame. Through the method, in a case that use of the second path is limited, a data frame having a high stall probability is actively retransmitted through the second path to reduce a transmission delay of the data frame.

In addition, in the data frame transmission method provided in this embodiment of this application, the strategies of the primary path switching strategy are introduced. A primary path switching scheduler in the strategies of the primary path switching strategy and a multipath scheduler of the related art schedule different paths for each data packet. In this embodiment of this application, the Wi-Fi path is selected as the primary path by default and data frames are scheduled on the primary path, while the cellular path is used only when data frames that may be delayed are needed. However, in practice, severe capacity degradation of the Wi-Fi path occasionally occurs. FIG. 6 is a schematic diagram of a sudden data frame pause lasting for hundreds of milliseconds due to capacity degradation of a Wi-Fi path according to an embodiment of this application. As shown in FIG. 6, the Wi-Fi path experiences capacity degradation at time (about time 15.3), and a data frame delay and an RTT of a data frame transmitted on the Wi-Fi path suddenly increase to 1700 ms. This capacity degradation may cause sudden frame pause lasting for hundreds of milliseconds, which may significantly affect user experience.

To solve the problem, the multipath agent module may temporarily switch the primary path from the Wi-Fi path to the cellular path, and stop transmitting a new data frame on the degraded Wi-Fi path. Similar to a process of the data frame retransmission strategy, the multipath agent module continuously uses $\hat{M}_2$ provided by the state manager to solve the ILP problem and obtain a decision $X_2$. Primary path switching is enabled when two conditions are satisfied:

Condition i): Transmission durations $T_l$ and $X_2$ of data frames that are first assigned by the transmitting device and not acknowledged to be received by the receiving device are matched (i.e., $T_l = S_i \in X_2$), where a transmission duration $T_2$ of a data frame that is first assigned by the transmitting device and not acknowledged to be received by the receiving device is equivalent to a path duration of a target data frame.

Condition ii): An RTT of the cellular path is lower than an RTT of the Wi-Fi path.

In this case, in this embodiment of this application, all newly generated data frames are transmitted through the cellular path, and the ILP problem of the decision is stopped from being solved. In addition, the multipath agent module immediately retransmits all data frames that are being transmitted on the Wi-Fi path through the cellular path because the data frames may experience a long delay when capacity degradation is detected. However, directly using the cellular path as the primary path violates our cellular data limitation rule, and because the capacity degradation of the Wi-Fi path is transient, it is necessary to switch back to the Wi-Fi path as soon as possible. When a new data frame is transmitted through the cellular path, a transmitting queue of the Wi-Fi path may be emptied. When less than two (a specific quantity may be set according to requirements; two indicates that the quantity is small; it is difficult to collect statistics on a rule; and a capacity detection mechanism of the Wi-Fi path needs to ensure that there are at least two in-flight data frames on the Wi-Fi path) data frames are being transmitted on the Wi-Fi path, a detection data frame may start to be transmitted on the Wi-Fi path to detect any capacity improvement. Once the capacity of the Wi-Fi path is restored (i.e., the transmission durations of the data frames that are first assigned by the transmitting device on the Wi-Fi path and not acknowledged to be received by the receiving device are not within $X_2$), the multipath agent module switches the primary path back to the Wi-Fi path, and restores the solving process of the ILP problem.

In some embodiments, the determining a first duration threshold according to a first group of state probabilities and a first group of stall condition probabilities may be implemented in the following modes:

S21: Determine, in a preset duration threshold set according to the first group of state probabilities and the first group of stall condition probabilities, the first duration threshold that satisfies a first stall constraint condition and a first path constraint condition, where the first path constraint condition includes: a utilization rate, determined according to the first duration threshold, of the second path is less than or equal to a preset first utilization rate threshold; the first stall constraint condition includes: a stall rate, determined according to the first duration threshold, of the first path in a first duration threshold subset is minimum; the first duration threshold subset includes the first duration threshold; the first duration threshold subset is composed of duration thresholds that satisfy a first condition in the duration threshold set; and the first condition is that the utilization rate, determined according to the duration thresholds, of the second path is less than or equal to the preset first utilization rate threshold.

In some embodiments, a real-time streaming media application program, such as cloud gaming, needs to keep a low delay all the time, even at a tail (in a high quantile). The long tail delay may cause frequent stall of the video frame, thereby severely affecting user experience. In the Wi-Fi path in a mobile scene, it is difficult to achieve a consistent low delay due to fluctuation of the Wi-Fi path. At present, although the influence of wireless fluctuation of the Wi-Fi path may be alleviated by the cellular path, when transmission is performed by a plurality of channels, it is crucial to limit the use amount of cellular data.

**EP 4 772 254 A1**

The embodiments of this application aim to reduce the long tail delay and the stall rate of the video data frame in mobile real-time streaming media while minimizing the use amount of the cellular data in the cellular path. Two transmission states, i.e., the "data frame retransmission strategy" and the "primary path switching strategy" are designed, the features of a network are captured by deriving state probability models, and balance of ILP is established for each user session, to determine occasions of the "data frame retransmission strategy" and the "primary path switching strategy". Compared with other multi-channel transmission solutions in the related art, the long tail delay and the stall rate may be greatly reduced. Meanwhile, a condition for limiting switching of the cellular path is provided according to a utilization rate of the second path, thereby saving consumed cellular network data.

In some embodiments, taking an example in which a target data frame is f51 and transmitted data frames are f41 to f50, a first group of state probabilities includes $P(S_1)$, $P(S_2)$, and $P(S_3)$, and values are sequentially: 0.5, 0.2, and 0.3; and a first group of stall condition probabilities includes $P(stall|S_1)$, $P(stall|S_2)$, and $P(stall|S_3)$, and values are sequentially: 0.05, 0.02, and 0.09. A preset duration threshold set may include each transmission state in a first group of transmission states ($S_1$, $S_2$, and $S_3$, with values of 120 ms, 130 ms, and 240 ms sequentially); a first stall constraint condition may be, but not limited to, expressed as a maximum item in the above formula (7); a first path constraint condition may be, but not limited to, expressed as a constraint item in the above formula (7); and a first duration threshold may be, but not limited to, a strategy $X_1$ obtained by solving the ILP of the above formula (7).

In this embodiment of this application, the first path constraint condition includes: a utilization rate, determined according to the first duration threshold, of the second path is less than or equal to a preset first utilization rate threshold, where in the above formula (7), the utilization rate of the second path may be, but not limited to, expressed as: $\sum_{S_i \in U} P(S_i)x_i$, and in the above formula (7), the preset first utilization rate threshold may be, but not limited to, expressed as: $\sum_{S_i \in U} P(stall|S_i)P(S_i)\delta$.

In some embodiments, the determining a first duration threshold according to a first group of state probabilities and a first group of stall condition probabilities may be implemented in the following modes:

S31: Determine, in a preset duration threshold set according to the first group of state probabilities and the first group of stall condition probabilities, a first duration threshold subset that satisfies a first condition, the first condition being that a utilization rate, determined according to duration thresholds, of the second path is less than or equal to a preset first utilization rate threshold; and

S32: Determine, in the first duration threshold subset according to the first group of state probabilities and the first group of stall condition probabilities, the first duration threshold, a stall rate, determined according to the first duration threshold, of the first path being minimum in the first duration threshold subset.

In some embodiments, according to the first group of state probabilities and the first group of stall condition probabilities, in the preset duration threshold set, the first duration threshold subset that satisfies the first condition is determined. For example, according to the first group of state probabilities ($P(S_1)$, $P(S_2)$, and $P(S_3)$) and the first group of stall condition probabilities ($P(stall|S_1)$, $P(stall|S_2)$, and $P(stall|S_3)$), in the preset duration threshold set ($S_1$, $S_2$, and $S_3$), the first duration threshold subset ($S_2$ and $S_3$) that satisfy the first condition are determined.

In some embodiments, according to the first group of state probabilities and the first group of stall condition probabilities, in the first duration threshold subset, the first duration threshold is determined. For example, according to the first group of state probabilities ($P(S_1)$, $P(S_2)$, and $P(S_3)$) and the first group of stall condition probabilities ($P(stall|S_1)$, $P(stall|S_2)$, and $P(stall|S_3)$), in the first duration threshold subset ($S_2$ and $S_3$), the first duration thresholds $S_2$ are determined, i.e., $X_1 = S_2 = 130$ms.

In some embodiments, the determining, in the preset duration threshold set according to the first group of state probabilities and the first group of stall condition probabilities, a first duration threshold subset that satisfies a first condition may be implemented in the following modes:

determining through the following operations, in a case that the duration threshold set includes N duration thresholds and the transmission states include transmission durations, whether a $k^{th}$ duration threshold in the N duration thresholds satisfies the first condition, k being a positive integer greater than or equal to 1 and less than or equal to N.

S41: Determine a $k^{th}$ utilization rate of the second path according to the first group of state probabilities and a $k^{th}$ group of retransmission parameters, each retransmission parameter in the $k^{th}$ group of retransmission parameters being configured for indicating whether one transmission duration in M transmission durations is greater than the $k^{th}$ duration threshold, the M transmission durations including different transmission durations in a first transmission duration set, the first transmission duration set including a transmission duration of each data frame of the transmitted data frames, and M being a positive integer greater than or equal to 2; and

S42: Determine, in a case that the $k^{th}$ utilization rate is less than or equal to the preset first utilization rate threshold, that the $k^{th}$ duration threshold satisfies the first condition.

In some embodiments, taking the transmitted data frames in Table 1 as an example, the duration threshold set includes 120 ms, 130 ms, and 240 ms. There are three duration thresholds. Whether a second duration threshold (i.e., 130 ms) in two duration thresholds satisfies the first condition is determined through the following operation: determining a second utilization rate of the second path according to the first group of state probabilities ($P(S_1)$, $P(S_2)$, and $P(S_3)$)) and a second group of retransmission parameters ($x_1$, $x_2$, and $x_3$ with values of 0, 0, and 1 sequentially), where each retransmission parameter in the second group of retransmission parameters is configured for indicating whether one transmission duration in three transmission durations is greater than the second duration threshold (i.e., 130 ms), 0 indicates that a corresponding transmission duration is not greater than the second duration threshold, and 1 indicates that a corresponding transmission duration is greater than the second duration threshold. For example, one transmission duration $S_1 = 120ms$ of the three transmission durations is not greater than the second duration threshold (130 ms), and thus, a retransmission parameter $x_1$ of the transmission duration $S_1 = 120ms$ is 0; one transmission duration $S_2 = 130ms$ of the three transmission durations is not greater than the second duration threshold (130 ms), and thus, a retransmission parameter $x_2$ of the transmission duration $S_2 = 130ms$ is 0; and one transmission duration $S_3 = 240ms$ of the three transmission durations is not greater than the second duration threshold (130 ms), and thus, a retransmission parameter $x_3$ of the transmission duration $S_3 = 240ms$ is 1. The three transmission durations include different transmission durations (i.e., 120 ms, 130 ms, and 240 ms) in the first transmission duration set (120 ms, 120 ms, 130 ms, 120 ms, 240 ms, 240 ms, 130 ms, 120 ms, 240 ms, and 120 ms), and the first transmission duration set includes the transmission duration of each data frame of the transmitted data frames. In a case that the second utilization rate is less than or equal to the preset first utilization rate threshold, the second duration threshold is determined as satisfying the first condition.

In some embodiments, the determining a $k^{th}$ utilization rate of the second path according to the first group of state probabilities and a $k^{th}$ group of retransmission parameters may be implemented in the following modes:

S51: Correspondingly multiply, in a case that the first group of state probabilities includes M state probabilities and the $k^{th}$ group of retransmission parameters includes M retransmission parameters, the M state probabilities by the M retransmission parameters to obtain M first product values, the first group of transmission states including the M different transmission durations in the first transmission duration set, each retransmission parameter of the M retransmission parameters being configured for indicating whether one transmission duration in the M transmission durations is greater than the $k^{th}$ duration threshold, an $i^{th}$ first product value in the M first product values being equal to a value obtained by multiplying an $i^{th}$ state probability in the M state probabilities by an $i^{th}$ retransmission parameter in the M retransmission parameters, i being a positive integer greater than or equal to 1 and less than or equal to M, the $i^{th}$ state probability being a probability that an $i^{th}$ transmission duration in the M transmission durations occurs in the first transmission duration set, and the $i^{th}$ retransmission parameter being configured for indicating whether the $i^{th}$ transmission duration in the M transmission durations is greater than the $k^{th}$ duration threshold; and

S52: Determine the $k^{th}$ utilization rate of the second path to be equal to a sum of the M first product values.

In this embodiment of this application, taking an example in which the first group of state probabilities includes $P(S_1)$, $P(S_2)$, and $P(S_3)$, and the second group of retransmission parameters includes $x_1$, $x_2$, and $x_3$, the second utilization rate of the second path is determined. M (which is 3) state probabilities are correspondingly multiplied by M (which is 3) retransmission parameters to obtain M (which is 3) first product values (i.e., $P(S_1) * x_1$, $P(S_2) * x_2$, and $P(S_3) * x_3$). The second utilization rate of the second path is determined to be equal to a sum of the M (which is 3) first product values, i.e., $P(S_1) * x_1 + P(S_2) * x_2 + P(S_3) * x_3$, which may be represented as $\sum_{S_i \in U} P(S_i)x_i$, where values of $i$ are 1, 2, and 3.

In some embodiments, the first utilization rate threshold is determined in the following mode:

S61: Correspondingly multiply, in a case that the first group of state probabilities includes M state probabilities and the first group of stall condition probabilities includes M stall condition probabilities, the M state probabilities by the M stall condition probabilities to obtain M second product values, the first group of transmission states including the M different transmission durations in the first transmission duration set, the M stall condition probabilities including: a probability that a data frame having a transmission duration of the $i^{th}$ transmission duration in the transmitted data frames stalls, an $i^{th}$ second product value in the M second product values being equal to a value obtained by multiplying an $i^{th}$ state probability in the M state probabilities by an $i^{th}$ stall condition probability in the M stall conditional probabilities, i being a positive integer greater than or equal to 1 and less than or equal to M, the $i^{th}$ state probability being a probability that the $i^{th}$ transmission duration in the M transmission durations occurs in the first transmission duration set, and the $i^{th}$ stall condition probability being configured for indicating a probability that a data frame having a transmission duration of the $i^{th}$ transmission duration in the transmitted data frames stalls; and

S62: Multiply a sum of the M second product values by a preset coefficient to obtain the first utilization rate threshold.

In some embodiments, taking an example in which the first group of state probabilities includes $P(S_1)$, $P(S_2)$, and $P(S_3)$, and the first group of stall condition probabilities includes $P(stall|S_1)$, $P(stall|S_2)$, and $P(stall|S_3)$, M (which is 3) state probabilities are correspondingly multiplied by M (which is 3) stall condition probabilities to obtain M (which is 3) second product values (i.e., $P(S_1)*P(stall|S_1)$, $P(S_2)*P(stall|S_2)$, and $P(S_3)*P(stall|S_3)$), and a sum ($P(S_1)*P(stall|S_1) + P(S_2)*P(stall|S_2) + P(S_3)*P(stall|S_3)$) of the M (which is 3) second product values is multiplied by a preset coefficient $\delta$ to obtain a first utilization rate threshold $\sum_{S_i \in U} P(stall|S_i)P(S_i)\delta$, where values of $i$ are 1, 2, and 3.

In this embodiment of this application, the first utilization rate threshold is determined according to a plurality of state probabilities, thereby improving accuracy of determining the first utilization rate threshold. The first utilization rate threshold is set to limit switching of the cellular path, thereby reducing consumption of the cellular network data during data transmission and reducing data transmission cost.

In some embodiments, the determining, in the first duration threshold subset according to the first group of state probabilities and the first group of stall condition probabilities, the first duration threshold may be implemented in the following modes:

S71: Determine, in a case that the first duration threshold subset includes P duration thresholds and the transmission states include the transmission durations, a $j^{th}$ stall rate of the first path according to a $j^{th}$ duration threshold in the P duration thresholds through the following operation, j being a positive integer greater than or equal to 1 and less than or equal to P: determining the $j^{th}$ stall rate according to the first group of stall condition probabilities, the first group of state probabilities, and a $j^{th}$ group of retransmission parameters, each retransmission parameter in the $j^{th}$ group of retransmission parameters being configured for indicating whether one transmission duration in the M transmission durations is greater than the $j^{th}$ duration threshold, the M transmission durations including different transmission durations in the first transmission duration set, the first transmission duration set including the transmission duration of each data frame in the transmitted data frames, and M being a positive integer greater than or equal to 2; and

S72: Determine, from the P duration thresholds, a duration threshold at which a stall rate is minimum, to obtain the first duration threshold.

In some embodiments, taking an example in which the first duration threshold subset includes $S_2$ and $S_3$, i.e., the first duration threshold subset includes two duration thresholds, which are $S_2$ and $S_3$, respectively, a second stall rate of the first path is determined according to the $j^{th}$ duration threshold (for example, if the value of j is 2, the duration threshold is $S_3$) in two duration thresholds through the following operations, and the second stall rate is determined according to the first group of stall condition probabilities ($P(stall|S_1)$, $P(stall|S_2)$, and $P(stall|S_3)$), the first group of state probabilities ($P(S_1)$, $P(S_2)$, and $P(S_3)$), and a second group of retransmission parameters ($x_1$, $x_2$, and $x_3$).

In some embodiments, the determining the $j^{th}$ stall rate according to the first group of stall condition probabilities, the first group of state probabilities, and a $j^{th}$ group of retransmission parameters may be implemented in the following modes:

S81: Correspondingly multiply, in a case that the first group of state probabilities includes M state probabilities, the first group of stall condition probabilities includes M stall condition probabilities, the $j^{th}$ group of retransmission parameters includes M retransmission parameters, and a $j^{th}$ group of path parameters includes M path parameters, the M stall condition probabilities, the M state probabilities, the M path parameters, and the M retransmission parameters, to obtain M third product values, the first group of transmission states including the M different transmission durations in the first transmission duration set, each retransmission parameter of the M retransmission parameters being configured for indicating whether one transmission duration in the M transmission durations is greater than the $j^{th}$ duration threshold, each path parameter of the M path parameters being a path parameter, determined according to one transmission duration of the M transmission durations, of the second path, an $i^{th}$ third product value in the M third product values being equal to a value obtained by multiplying an $i^{th}$ stall condition probability in the M stall condition probabilities, an $i^{th}$ state probability in the M state probabilities, and an $i^{th}$ path parameter in the M path parameters by an $i^{th}$ retransmission parameter in the M retransmission parameters, i being a positive integer greater than or equal to 1 and less than or equal to M, the $i^{th}$ stall condition probability being configured for indicating a probability that a data frame having a transmission duration of an $i^{th}$ transmission duration in the transmitted data frames stalls, the $i^{th}$ state probability being a probability that the $i^{th}$ transmission duration in the M transmission durations occurs in the first transmission duration set, the $i^{th}$ retransmission parameter being configured for indicating whether the $i^{th}$ transmission duration in the M transmission durations is greater than the $j^{th}$ duration threshold, and the $i^{th}$ path parameter being a path parameter, determined according to the $i^{th}$ transmission duration in the M transmission durations, of the second path; and

S82: Determine the j$^{th}$ stall rate to be equal to a sum of the M third product values.

In this embodiment of this application, taking an example in which the value of M is 3 and the value of j is 2, in a case that the first group of state probabilities includes three state probabilities ($P(S_1)$, $P(S_2)$, and $P(S_3)$), the first group of stall condition probabilities includes three stall condition probabilities ($P(stall|S_1)$, $P(stall|S_2)$, and $P(stall|S_3)$), the second group of retransmission parameters includes three retransmission parameters ($x_1$, $x_2$, and $x_3$), and the second group of path parameters includes three path parameters ($P_{backup}(S_1)$, $P_{backup}(S_2)$, and $P_{backup}(S_3)$), the three stall condition probabilities, the three state probabilities, the three path parameters, and the three retransmission parameters are multiplied correspondingly to obtain three third product values, i.e., $\Sigma_{S_i \in U} P(stall|S_i) P(S_i) P_{backup}(S_i) \cdot x_i$, where values of $i$ are 1, 2, and 3.

In some embodiments, M path parameters are determined in the following modes:

S91: Determine, in a case that the transmitting device transmits a group of detection frames to the receiving device through the second path and acquires the group of RTTs corresponding to the group of detection frames, the M path parameters according to a group of RTTs, the M transmission durations, and a preset target duration threshold, an i$^{th}$ path parameter in the M path parameters being a path parameter determined according to the group of RTTs, the i$^{th}$ transmission duration in the M transmission durations, and the target duration threshold.

In this embodiment of this application, the above state manager in FIG. 5 may continuously detect a capacity of a Wi-Fi path and a capacity of a cellular path of each user session. Two state probability models $\hat{M}_1$ and $\hat{M}_2$ are created and managed for the multipath agent module. $\hat{M}_1$ is configured for a data frame retransmission strategy to make a data frame retransmission decision, and $\hat{M}_2$ is configured for a primary path switching strategy to make a primary path switching decision. However, in practice, two technical problems are encountered:

Technical problem i): which information is to be extracted from statistical information of the transmitting device to form a state space; and

Technical problem ii): although an overall frame pause rate is assumed to be a constant value, how to obtain the probability distributions of $P(stall|S_i)$ and $P(S_i)$.

For the above technical problem i) related to the establishment of the state space, in principle, in a solution, all available information may be extracted from the statistical information of the transmitting device to form a high-dimensional state space. However, when determining which information is configured for establishing the state space, this application considers two factors:

Factor i): a multidimensional state space may increase difficulty and complexity of maintaining the state probability models and deriving backup path utilization strategies based on the state probability models; and

Factor ii): some information in the statistical information, such as RTTs and acknowledged bytes, has been used by the CCA to maintain low and median delay, and therefore, is not included in the state space.

Taking into account the above two factors, in the technical solution provided in this embodiment of this application, single-dimensional state spaces are selected for use for two state probability models, where the state space corresponding to the state probability model $\hat{M}_1$ of the data frame retransmission strategy is frame retransmission state space $U_1$, and the state space corresponding to the state probability model $\hat{M}_2$ of the primary path switching strategy is a primary path switching state space $U_2$.

For the establishment of the frame retransmission state space $U_1$: a state space $U_1$ is created by using a transmission duration $S_i$ of each data frame in the transmitted data frames to determine when to retransmit the data frames on the cellular path. For example: the transmission duration $S_i$ of each data frame in the transmitted data frames may be calculated, and this value is configured for representing a point in the state space $U_1$. The transmission duration $S_i$ of each data frame is selected for use as a transmission state, so that based on the state space $U_1$, the state probability model $\hat{M}_1$ is derived. The state probability model $\hat{M}_1$ may indicate a correlation between a pause rate and the transmission duration of the data frame. In turn, necessary information is provided for a subsequent data frame retransmission strategy, so as to retransmit the data frame on a backup path in time.

For the establishment of the primary path switching state space $U_2$: To derive the state probability model $\hat{M}_2$ of the primary path switching strategy, a state space $U_2$ may be formed by using a path duration of each data frame, where the path duration of each data frame is a maximum transmission duration of the data frames being transmitted on a first path when a corresponding data frame enters the first path. The data frame, which is being transmitted, with the maximum transmission duration is a data frame, which is first transmitted and not acknowledged to be received by the receiving device, in a plurality of data frames transmitted on the current first path. The path duration corresponding to each data frame may reflect a current data frame transmission delay of the first path when each data frame enters the first path. Therefore, the state space $U_2$ may reflect a data frame transmission delay of the primary path, thereby providing clues about capacity degradation of the primary path and reference information of path switching. In practice, the state manager may periodically check transmission time of all unacknowledged data frames on the first path, and set the transmission duration of the data frame which is first assigned as the path duration of all the data frames which are currently being transmitted.

In addition, the state manager may further detect a capacity of the cellular path. In this embodiment of this application, the cellular path may be configured as a backup path, but the cellular path may also be affected by fluctuation, and thus, a delay of data frame transmission is increased. The state manager may further detect characteristics of the cellular path to estimate a capacity of the cellular path, and determine whether the cellular path is sufficient for data frame transmission. The transmission time of the data frame is configured as the transmission state $S_i$, and in the transmission state $S_i$, the data frame has transmitted time of $S_i$. Therefore, to perform effective data frame retransmission or primary path switching to reduce the long tail delay, the RTT of the cellular path is not to exceed $T_{thresh}$ - $S_i$. Because a transmission delay of the data frame greater than 200 ms may cause stall in user experience, $T_{thresh}$ may be set as 200 ms. The RTT is used as a measure of the capacity of the backup path for evaluation through the following formula (8):

$$P_{backup}(S_i) = P(RTT_{cell} \leq T_{thresh} - S_i) \quad (8)$$

Where $P_{backup}(S_i)$ is a path parameter that indicates a probability that the backup path satisfies a condition for performing data frame transmission in the transmission state $S_i$; $S_i$ is a transmission duration in which a target data frame is already transmitted on the first path; $T_{thresh}$ is a threshold at which a user feels a stall; and $T_{thresh}$ - $S_i$ indicates a maximum allowable transmission duration if the second path is configured for retransmitting the target data frame and the user may not feel the stall. Therefore, the user may not feel the stall as long as the second path is configured for retransmitting the current target data frame and transmission duration $RTT_{cell}$ of the target data frame on the second path is less than or equal to $T_{thresh}$ - $S_i$. In this case, retransmission of the data frame may effectively reduce the long tail delay.

In some embodiments, M path parameters are determined according to a group of RTTs, M transmission durations, and a preset target duration threshold:

An $i^{th}$ path parameter is determined according to the group of RTTs, an $i^{th}$ transmission duration in the M transmission durations, and the target duration threshold through the following operations:

S101: Subtract, in a case that a group of detection frames includes Q detection frames and the group of RTTs includes Q RTTs, the $i^{th}$ transmission duration from the target duration threshold to obtain an $i^{th}$ duration difference, Q being a positive integer greater than or equal to 2, and the Q RTTs including an RTT corresponding to each detection frame of the Q detection frames; and

S102: Divide an $i^{th}$ quantity by Q in a case that a quantity of RTTs less than or equal to the $i^{th}$ duration difference in the Q RTTs is the $i^{th}$ quantity, to obtain the $i^{th}$ path parameter.

In this embodiment of this application, as mentioned above, $P_{backup}(S_i)$ is the path parameter that indicates the probability that the backup path satisfies the condition for performing data frame transmission in the transmission state $S_i$. However, $P(RTT_{cell} \leq T_{thresh}$ - $S_i)$ may not be passively obtained directly from information fed back by the receiving device because the cellular path serves as the backup path and the feedback is intermittent. Therefore, the state manager may actively detect the RTT of the cellular path by periodically (for example, at an interval of 50 ms) transmitting 8-byte detection messages (i.e., the above detection frames). Overheads of the detection messages are theoretically less than 0.06%, and are lower than a rate of transmitting large video data frames (for example, 60 fps) at a high frame rate (which generally exceeds 4 KB).

In this embodiment of this application, the target duration threshold may be, but not limited to, $T_{thresh}$ in the above formula (8). The $i^{th}$ transmission duration may be, but not limited to, $S_i$ in the above formula (8). The $i^{th}$ transmission duration is subtracted from the target duration threshold to obtain the $i^{th}$ duration difference, i.e., $T_{thresh}$ - $S_i$. Taking an example in which a value of Q is 10 and the $i^{th}$ quantity is 8, this indicates that in 10 RTTs, a quantity of the RTTs with $RTT_{cell}$ less than or equal to $T_{thresh}$ - $S_i$ is 8. In this case, 8 may be divided by 10 to obtain the $i^{th}$ path parameter $P_{backup}(S_i) = 0.8$.

In some embodiments, a first group of stall condition probabilities is obtained in the following modes:

S111: Determine a plurality of data frames transmitted by the transmitting device to the receiving device and acknowledged to be received by the receiving device as the transmitted data frames within a first preset time period before the transmitting device transmits the target data frame; and acquire a first group of transmission states corresponding to the transmitted data frames;

S112: Determine a ratio of a quantity of data frames in each transmission state in the first group of transmission states to a total quantity of the transmitted data frames as a probability that a corresponding transmission state occurs in a first transmission state set to obtain a first group of state probabilities; and

S113: Determine a ratio of a quantity of data frames that stall in each transmission state in the first group of transmission states to the total quantity of the transmitted data frames as a stall probability that stall occurs in a corresponding transmission state to obtain a group of stall probabilities; and determine a product of a stall probability and a state probability that correspond to each transmission state in the first group of transmission states as a stall condition probability of the corresponding transmission state to obtain a first group of stall condition probabilities.

In this embodiment of this application, determination of the first group of state probabilities and the first group of stall condition probabilities involves a probability distribution deriving solution, where the first group of state probabilities and the first group of stall condition probabilities are derived through the state probability model $\hat{M}_1$. The state probability model $\hat{M}_1$ includes: probability distribution of $P(stall|S_i)$ and $P(S_i)$. However, it is difficult to accurately describe $P(stall|S_i)$ and $P(S_i)$. First, $P(stall|S_i)$ and $P(S_i)$ may be random for different times of different users. Secondly, the state manager cannot predict a future transmission state or stall event, but only may deduce approximate distributions of $P(stall|S_i)$ and $P(S_i)$ according to transmission states recorded historically. To solve this problem, an observation result discussed in FIG. 2 may be used, i.e., features of a network are kept stable for a single user in a period of time. Based on this, it may be assumed that the probability distribution of the transmission states remains unchanged in a period of time window. In a time window $\Delta$ (equivalent to the above first preset time period), each transmission state $S_i$ and a corresponding frequency of a stall event (which may be understood as "whether transmission stalls" collected in the above Table 1) may be obtained, and expressed as $\hat{P}(S_i)$ and $\hat{P}(stall|S_i)$. The frequencies are configured for approximating the probability distribution of the transmission states in the time window $\Delta$. An approximate pause rate $\hat{P}(stall)$ may be derived through formula (1). In this mode, the state manager continuously updates the transmission states in the state manager. For each time window $\Delta$, two approximate state probability models $\hat{M}_1$ and $\hat{M}_2$ are created and maintained:

$$\widehat{M}_1 = \left\{\hat{P}(stall, \hat{P}(stall|S_i), \hat{P}(S_i)\right\}, S_i \in U_1;$$

$$\widehat{M}_2 = \left\{\hat{P}(stall, \hat{P}(stall|S_i), \hat{P}(S_i)\right\}, S_i \in U_2.$$

Where each user corresponds to two state probability models $\hat{M}_1$ and $\hat{M}_2$. A difference between the state probability models $\hat{M}_1$ and $\hat{M}_2$ lies in that selected state spaces are different. $\hat{M}_1$ corresponds to $U_1$, and each $S_i$ in $U_1$ represents a transmission duration of a data frame. $\hat{M}_2$ corresponds to $U_2$, and each $S_i$ in $U_2$ represents a path duration of the data frame. The transmission duration and the path duration of a same data frame may be understood as two different parameters of the data frame. The transmission duration of the data frame represents a duration for which the data frame is transmitted on the first path, and may reflect whether stall occurs on the data frame. The path duration of the data frame represents a maximum transmission duration of data frames being transmitted on the first path when the data frame enters the first path, and may reflect a transmission delay situation of the first path of the data frame transmitted currently. Therefore, $U_1$ may reflect a stall situation of a single data frame, and is applied to the data frame retransmission strategy. $U_2$ may reflect a transmission delay situation of the overall first path, and is applied to the primary path switching strategy.

In this embodiment of this application, a plurality of data frames transmitted by the transmitting device to the receiving device and acknowledged to be received by the receiving device are determined as the transmitted data frames within a first preset time period before the transmitting device transmits the target data frame, where the first preset time period may be, but not limited to, time window approximation in FIG. 5.

In this embodiment of this application, a ratio of a quantity of data frames in each transmission state in the first group of transmission states to a total quantity of the transmitted data frames is determined as a probability that a corresponding transmission state occurs in a first transmission state set to obtain a first group of state probabilities. Taking the above Table 1 as an example, the first group of transmission states includes: $S_1$, $S_2$, and $S_3$; corresponding quantities are sequentially 5, 2, and 3; and the total quantity of the transmitted data frames is 10. Therefore, the first group of state probabilities includes sequentially 0.5, 0.2, and 0.3.

In this embodiment of this application, a ratio of a quantity of data frames that stall in each transmission state in the first group of transmission states to the total quantity of the transmitted data frames is determined as a stall probability that stall occurs in a corresponding transmission state to obtain a group of stall probabilities. Taking the above Table 1 as an example, the first group of transmission states includes: $S_1$, $S_2$, and $S_3$, which have values of 120 ms, 130 ms, and 240 ms sequentially. The quantities of data frames that stall in each transmission state are sequentially 0, 0, and 3. The total quantity of the transmitted data frames is 10. Therefore, a group of stall probabilities includes 0, 0, and 0.3.

In this embodiment of this application, a product of a stall probability and a state probability that correspond to each transmission state in the first group of transmission states is determined as a stall condition probability of a corresponding transmission state to obtain a first group of stall condition probabilities, where as is known, the first group of state probabilities includes $P(S_1)$, $P(S_2)$, and $P(S_3)$, which have values of 0.5, 0.2, and 0.3 sequentially; and a first group of transmission states includes $S_1$, $S_2$, and $S_3$, and corresponding stall probabilities are 0, 0, and 0.3 sequentially. Therefore, the first group of stall condition probabilities includes 0, 0, and 0.09 sequentially.

In some embodiments, the first path is switched to the second path in the following modes:

S121: Acquire a path duration of a target data frame in a process of transmitting, by the transmitting device, the target data frame to the receiving device through the first path, the path duration of each data frame being a maximum transmission duration of data frames that are being transmitted on the first path when a corresponding data frame enters the first path;

S122: Determine a second duration threshold according to a second group of state probabilities and a second group of stall condition probabilities, the second group of state probabilities including a probability that each path state in a second group of path states occurs in a second path state set, the second group of path states including different path states in the second path state set, the second path state set including a path state of the first path when each data frame in the transmitted data frames enters the first path, the transmitted data frames being data frames transmitted by the transmitting device to the receiving device before the target data frame is transmitted, and the second group of stall condition probabilities including: probabilities that data frames belonging to each path state in the second group of path states in the transmitted data frames stall; and

S123: Switch, in a case that the path duration of the target data frame is greater than or equal to the second duration threshold and a current RTT of the second path is less than an RTT of the first path, a path for transmitting data frames between the transmitting device and the receiving device from the first path to the second path, the second path being a backup path of the first path.

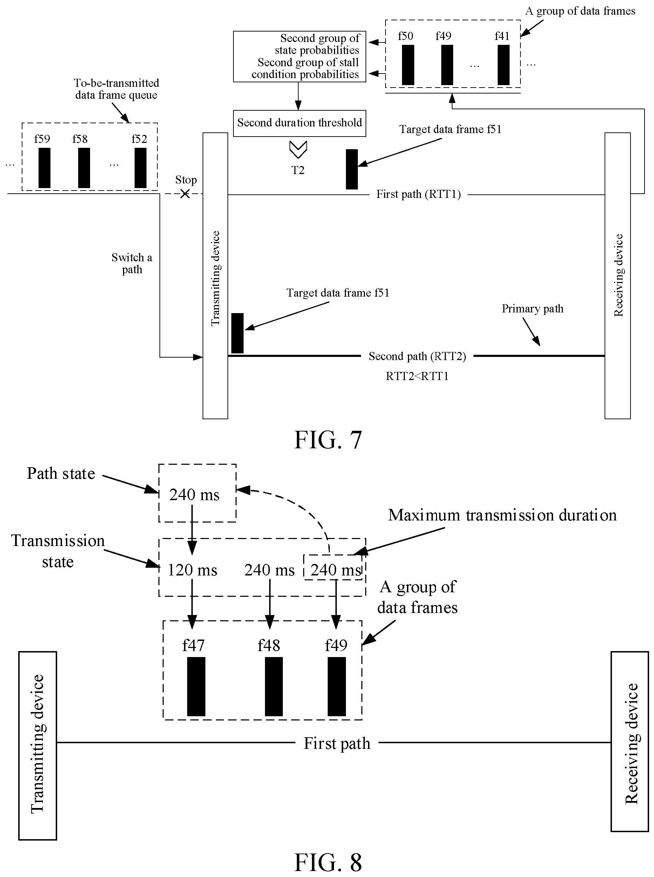

In this embodiment of this application, FIG. 7 is a second schematic diagram of an application environment of a data frame transmission method according to an embodiment of this application. As shown in FIG. 7, the above process of using the cellular path by citing the "primary path switching strategy" is presented, where a target data frame f51 is a data frame that is currently being transmitted on a first path (a main path, for example, a Wi-Fi path) between the transmitting device and the receiving device; the path duration of f51 is T2; and the transmitted data frames (f41 to f50) are data frames transmitted by the transmitting device to the receiving device before the target data frame is transmitted. A second group of state probabilities and a second group of stall condition probabilities are obtained according to the transmission state of each data frame of the transmitted data frames, and a second duration threshold is determined according to the second group of state probabilities and the second group of stall condition probabilities. The path duration T2 of f51 is compared with the second duration threshold. When T2 is greater than or equal to the second duration threshold and a current RTT of the second path is less than an RTT of the first path, a path for transmitting data frames between the transmitting device and the receiving device is switched from the first path to the second path (a backup path, such as a cellular path), and f51 and untransmitted data frames (f52,... f58, and f59,...) further included in a to-be-transmitted data frame queue are transferred to the second path. The above process presents the "primary path switching strategy" in the data frame transmission method, and an acting object of the strategy is a transmission path.

In this embodiment of this application, to better understand associations and differences between the second group of state probabilities and the first group of state probabilities, between the second group of stall condition probabilities and the first group of stall condition probabilities, and between the second duration threshold and the first duration threshold, taking an example in which a target data frame is f51 and the transmitted data frames are f41 to f50, as shown in Table 2 below, a transmission state of each data frame, whether stall occurs in each data frame, and a path state of each data frame are recorded, where the transmission state may be any parameter that may reflect a transmission delay of a single data frame in a transmission process of the data frame, such as a data frame transmission delay and a path duration of the data frame. The path state may be any parameter that may reflect a transmission delay of the first path in a transmission process of the data frame. Based on Table 1, the path duration of each data frame is taken as a path state in Table 2. For example, path duration of f41 is 120 ms, and no stall occurs; and the path duration of f45 is 240 ms, and a stall occurs.

Table 2

| Data frame | Transmission state | Whether transmission stalls | Path state |
|---|---|---|---|
| f41 | S41 (120 ms) | No | S41-1 (150 ms) |
| f42 | S42 (120 ms) | No | S42-1 (150 ms) |
| f43 | S43 (130 ms) | No | S43-1 (160 ms) |
| f44 | S44 (120 ms) | No | S44-1 (150 ms) |
| f45 | S45 (240 ms) | Yes | S45-1 (240 ms) |
| f46 | S46 (240 ms) | Yes | S46-1 (240 ms) |
| f47 | S47 (130 ms) | No | S47-1 (240 ms) |
| f48 | S48 (120 ms) | No | S48-1 (240 ms) |
| f49 | S49 (240 ms) | Yes | S49-1 (240 ms) |
| F50 | S50 (120 ms) | No | S50-1 (150 ms) |

As shown in the above Table 2, each data frame has two parameters: a transmission state and a path state. Taking an example in which a transmission duration is configured as a transmission state and a path duration is configured as a path state, FIG. 8 is a schematic diagram of a transmission duration and a path duration according to an embodiment of this application. As shown in FIG. 8, when a data frame f47 enters the first path, data frames that are currently being transmitted on the first path include f47, f48, and f49, where f49 is a data frame that is first transmitted from the transmitting device in the three data frames. Therefore, the transmission duration of this data frame is maximum. The transmission durations of f47, f48, and f49 are sequentially S47 (130 ms), S48 (120 ms), and S49 (240 ms). For the data frame f47, the path duration of the data frame f47 is a maximum transmission duration, i.e., 240 ms, of the data frames (f47, f48, and f49) that are being transmitted on the first path when the data frame f47 enters the first path. Therefore, the transmission duration S47 of the data frame f47 is 130 ms, and the path duration S47-1 is 240 ms.

In some embodiments, the determining a second duration threshold according to a second group of state probabilities and a second group of stall condition probabilities may be implemented in the following modes:

S131: Determine, in a preset duration threshold set according to the second group of state probabilities and the second group of stall condition probabilities, the second duration threshold that satisfies a second stall constraint condition and a second path constraint condition, the second path constraint condition including that a utilization rate, determined according to the second duration threshold, of the second path is less than or equal to a preset second utilization rate threshold, the second stall constraint condition including that a stall rate, determined according to the second duration threshold, of the first path in a second duration threshold subset is minimum, the second duration threshold subset including the second duration threshold, the second duration threshold subset being composed of duration thresholds that satisfy a second condition in the duration threshold set, and the second condition being that the utilization rate, determined according to the duration thresholds, of the second path is less than or equal to the preset second utilization rate threshold.

In some embodiments, a process of S131 is similar to the process of S21, and a difference lies in that the first group of state probabilities and the first group of stall condition probabilities are obtained based on the state probability model $\hat{M}_1$. $\hat{M}_1$ is derived from the state space $U_1$, where in $U_1$, each $S_i$ represents a transmission duration of a data frame. The second group of state probabilities and the second group of stall condition probabilities are obtained based on the state probability model $\hat{M}_2$. $\hat{M}_2$ is derived from the state space $U_2$, where in $U_2$, each $S_i$ represents a path duration of a data frame. Other processes are similar, and not described again.

In some embodiments, the determining a second duration threshold according to a second group of state probabilities and a second group of stall condition probabilities may be implemented in the following modes:

S141: Determine, in the preset duration threshold set according to the second group of state probabilities and the second group of stall condition probabilities, a second duration threshold subset that satisfies the second condition, the second condition being that a utilization rate, determined according to duration thresholds, of the second path is less than or equal to the preset second utilization rate threshold; and

S142: Determine, in the second duration threshold subset according to the second group of state probabilities and the second group of stall condition probabilities, the second duration threshold, a stall rate, determined according to the second duration threshold in the second duration threshold subset, of the first path being minimum.

In some embodiments, the process of S141 is similar to a process of S31; and a process of S142 is similar to the process of S32. A difference lies in that the first group of state probabilities and the first group of stall condition probabilities are obtained based on the state probability model $\hat{M}_1$. $\hat{M}_1$ is derived from the state space $U_1$, where in $U_1$, each $S_i$ represents transmission duration of a data frame. The second group of state probabilities and the second group of stall condition probabilities are obtained based on the state probability model $\hat{M}_2$. $\hat{M}_2$ is derived from the state space $U_2$, where in $U_2$, each $S_i$ represents a path duration of a data frame. Other processes are similar, and not described again, where the second duration threshold corresponds to $X_2$ in the above strategy X.

In some embodiments, the determining, in the preset duration threshold set according to the second group of state probabilities and the second group of stall condition probabilities, a second duration threshold subset that satisfies a second condition may be implemented in the following modes:

determining through the following operations, in a case that the duration threshold set includes R duration thresholds and the path states include path durations, whether a $t^{th}$ duration threshold in the R duration thresholds satisfies the second condition, t being a positive integer greater than or equal to 1 and less than or equal to R:

S151: Determine a $t^{th}$ utilization rate of the second path according to the second group of state probabilities and a $t^{th}$ group of switching parameters, each switching parameter in the $t^{th}$ group of switching parameters being configured for indicating whether one path duration in Y path durations is greater than the $t^{th}$ duration threshold, the Y path durations including different path durations in a second path duration set, the second path duration set including a path duration of each data frame of the transmitted data frames, and Y being a positive integer greater than or equal to 2; and

S152: Determine, in a case that the $t^{th}$ utilization rate is less than or equal to the preset second utilization rate threshold, that the $t^{th}$ duration threshold satisfies the second condition.

In some embodiments, a process of S151 is similar to the process of S41, and a process of S152 is similar to the process of S42. A difference lies in that the first group of state probabilities and the first group of stall condition probabilities are obtained based on the state probability model $\hat{M}_1$. $\hat{M}_1$ is derived from the state space $U_1$, where in $U_1$, each $S_i$ represents a transmission duration of a data frame. The second group of state probabilities and the second group of stall condition probabilities are obtained based on the state probability model $\hat{M}_2$. $\hat{M}_2$ is derived from the state space $U_2$, where in $U_2$, each $S_i$ represents a path duration of a data frame. Other processes are similar, and not described again.

In some embodiments, a second group of stall condition probabilities is obtained in the following modes:

S161: Determine a plurality of data frames transmitted by the transmitting device to the receiving device and acknowledged to be received by the receiving device as the transmitted data frames within a second preset time period before the transmitting device transmits the target data frame; and acquire a second group of path states corresponding to the transmitted data frames;

S162: Determine a ratio of a quantity of data frames in each path state in the second group of path states to a total quantity of the transmitted data frames as a probability that a corresponding path state occurs in a second path state set to obtain the second group of state probabilities; and

S163: Determine a ratio of a quantity of data frames that stall in each path state in the second group of path states to the total quantity of the transmitted data frames as a stall probability that stall occurs in a corresponding path state to obtain a group of stall probabilities; and determine a ratio of a stall probability and a state probability that correspond to each path state in the second group of path states as a stall condition probability of the corresponding path state to obtain a second group of stall condition probabilities.

In this embodiment of this application, a process of S161 is similar to the process of S111, a process of S162 is similar to the process of S112, and a process of S163 is similar to the process of S113. A difference lies in that the first group of state probabilities and the first group of stall condition probabilities are obtained based on the state probability model $\hat{M}_1$. $\hat{M}_1$ is derived from the state space $U_1$, where in $U_1$, each $S_i$ represents a transmission duration of a data frame. The second group of state probabilities and the second group of stall condition probabilities are obtained based on the state probability model $\hat{M}_2$. $\hat{M}_2$ is derived from the state space $U_2$, where in $U_2$, each $S_i$ represents a path duration of a data frame. Other processes are similar, and not described again.

For simple description, the above method embodiments are stated as a series of action combinations. However, a person skilled in the art is to know that the embodiments of this application are not limited by the sequence of the described actions because some operations may be performed in another sequence or simultaneously according to the embodiments of this application. In addition, a person skilled in the art is also to know that the embodiments described in this description are all exemplary embodiments, and the involved actions and modules are not necessarily required for the embodiments of this application.

Through the data frame transmission method provided in the embodiments of this application, a technical effect that transmission of the data frames satisfies both a low stall rate and low cost is achieved. Comparison of effects of simulation experiments of the data frame transmission method provided in the embodiments of this application is presented as follows:

Test platform: Multipath extension versions of mpshell and Mahimahi may be used for network simulation. To demonstrate cooperation between the data frame transmission method and the CCAs provided in this embodiment of this application, this simulation experiment further implements two CCAs specifically configured for real-time streaming media, including Salsify and SQP. In this simulation experiment, detection information of a Wi-Fi path and a cellular path is collected based on running logs of user sessions. The running logs include wireless network bandwidths perceived by a user. RTT dilation caused by wireless fluctuation may cause the user to perceive that the bandwidth suddenly decreases. Each running log is replayed for more than 10 minutes. In this simulation experiment, a data frame transmission solution provided in this embodiment of this application is compared with the following multipath transmission solutions:

Solution 1) Single path (SP): All video data frames are exclusively transmitted through the Wi-Fi path;

Solution 2) minRTT: is a default multipath scheduler of a multipath transmission control protocol (MPTCP), and schedules data packets through a path with a minimum estimated RTT.

Solution 3) Earliest completion first (ECF): An available aggregated bandwidth of all paths is provided through some related information (such as a cwnd value) of the paths except the RTT. It is assumed that underlying CCAs are based on a congestion window and a cwnd value is needed to make a decision. For the rate-based CCAs used by us, the cwnd value may be obtained by multiplying a transmitting by and the estimated RTT.

Solution 4) BLEST: aims to avoid HoL blocking and false retransmission by controlling buffer blocking. A cwnd value may be provided for BLEST in the same mode as described above.

Solution 5) RAVEN: replicates data packets on a plurality of paths.

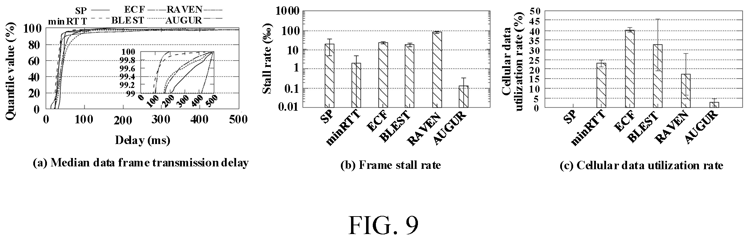

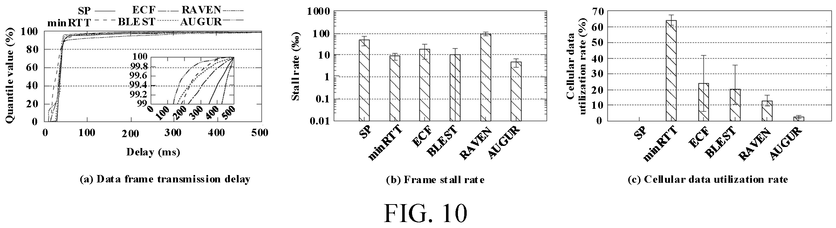

Test performance results of this simulation experiment are as follows:
a data frame transmission delay and a data frame stall rate. Data frame transmission delays of different CCAs in the above solutions 1) to 5) (hereinafter referred to as other multipath solutions) and the data frame transmission solution (hereinafter referred to as this embodiment of this application) provided in this embodiment of this application are measured in this simulation experiment. FIG. 9 illustrates schematic diagrams of performance of running various solutions together with a Salsify congestion control algorithm in a simulation experiment. FIG. 10 illustrates schematic diagrams of performance of running various solutions together with an SQP congestion control algorithm in a simulation experiment. As shown in FIG. 9 (a) and FIG. 10 (a), although median data frame transmission delays of all the multipath solutions are similar, in this embodiment of this application, the long tail delay is effectively reduced and is better than that of other multipath solutions in two CCAs. Compared with data frame transmission by only Wi-Fi, in this embodiment of this application, the 99th percentile delays of the Salsify and the SQP are reduced by 50% and 65%, respectively. Therefore, the stall rate of the data frame is effectively reduced in this embodiment of this application, as shown in FIG. 9 (b) and FIG. 10 (b). In all the multipath solutions, a minimum average frame stall rate is achieved in this embodiment of this application, and compared with usage of only the Wi-Fi path (i.e., the above solution 1), the stall rates of the Salsify and the SQP are reduced by 99.5% and 91.5%, respectively in this embodiment of this application. This indicates that this embodiment of this application cooperates with different CCAs and effectively reduces the long tail delay and cellular data utilization in real-time streaming media. To evaluate the capability of reducing the cellular data utilization in this embodiment of this application, a ratio of a quantity of bytes transmitted on the cellular path to a total quantity of transmitted bytes in all the multipath solutions is calculated in this simulation experiment. As shown in FIG. 9 (c) and FIG. 10 (c), the results indicate that in all the multipath solutions, a minimum cellular data utilization rate is achieved in this embodiment of this application, and the cellular data utilization rates of the Salsify and the SQP are only 2.7% and 2.3%. Compared with the minRTT that may effectively reduce the frame stall rate, the cellular data utilization rates of the Salsify and the SQP are reduced by 88.1% and 96.4% respectively in this embodiment of this application. These results indicate that the cellular data utilization may be effectively reduced without affecting properties in this embodiment of this application, making this embodiment of this application a feasible option for application platform deployment.

In addition to the above simulation experiment, a real online testing experiment is further performed in this application. Comparison of effects of the real online testing experiment is as follows:
Setting of the real online testing experiment: Large-scale A/B tests are performed in this real online testing experiment to evaluate the properties of this embodiment of this application on a platform. In addition to this embodiment of this application and the single path Wi-Fi (SP), a minRTT based on a simulation result is further deployed. Users are randomly assigned to algorithms with an equipartition probability. All other settings and implementations, such as CCAs, remain unchanged. The A/B tests are performed for three weeks, and a total of 21463 user sessions are performed.

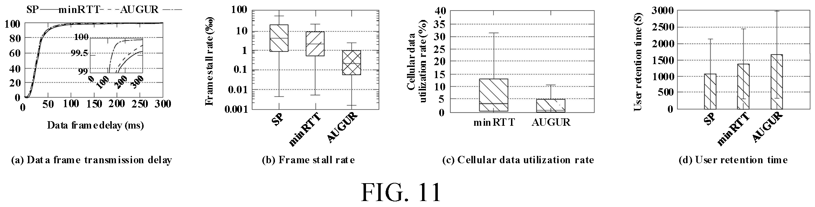

Property performance of the real online testing experiment: a frame transmission delay and a stall rate of a data frame. A real-time service needs interactivity, and therefore, achieving a consistent low delay is a key requirement. To evaluate the properties of the data frame transmission delay in this embodiment of this application, CDF diagrams of the data frame transmission delay and the frame stall rate for all user sessions using three multipath solutions are drawn. FIG. 11 illustrates schematic diagrams of results of real online testing experiments of solutions. As shown in FIG. 11 (a) and FIG. 11 (b), although median delays of all the solutions are similar, this embodiment of this application is better than the SP and the minRTT in terms of long tail delay reduction at 99th percentile, and reductions of 31.3% and 26.7% are implemented, respectively. In addition, for a long tail with severe delay (i.e., a frame delay ≥ 200 milliseconds), user experience is significantly affected. In this embodiment of this application, the 99.9th percentile delay may be kept below 200 milliseconds, while the 99th percentile delay of the SP and the minRTT exceeds 300 milliseconds. Therefore, compared with the SP and the minRTT, the median stall rates of all user sessions may be reduced by 95.1% and 90.1% respectively in this embodiment of this application. These results indicate that in a case that RTT dilation caused by wireless fluctuation exists, in this embodiment of this application, the long tail delay and the frame stall rate may be reduced, and service experience of most mobile users may be enhanced. In terms of cellular cost. To compare the cellular data utilization cases of this embodiment of this application and a baseline minRTT multipath scheduler, a ratio of a quantity of bytes transmitted on the cellular path by each user session to a total quantity of transmitted bytes is calculated in this real online testing experiment. As shown in FIG. 11 (c), on average, a proportion of video data frames, generated in this embodiment of this application, transmitted through the cellular path is 6.6%, which is 1.7 times less than that of the minRTT. In addition, for all the user sessions, a median cellular data utilization rate generated in this embodiment of this application is 0.8%, which is 3.7 times less than that of the minRTT. The decrease in cellular data utilization may be attributable to two factors. First, in this embodiment of this application, only frames that may be delayed are retransmitted, rather than scheduling all data frames on a path with a low RTT. Second, in this embodiment of this application, a cellular budget is strictly limited according to formula (6), thereby generating a controlled cellular utilization mode. This limitation allows limiting maximum cellular traffic data consumption in this embodiment of this application, and reduces the maximum cellular traffic data consumption by 2.9 times compared with the minRTT scheduler. User retention time. To describe the impact of this embodiment of this application on user experience, an average retention time of three transmission solutions is shown in FIG. 11 (d). The result shows that, compared with the SP and the minRTT, after deployment in this embodiment of this application, the user retention time may be increased by 52.9% and 19.2% on average.

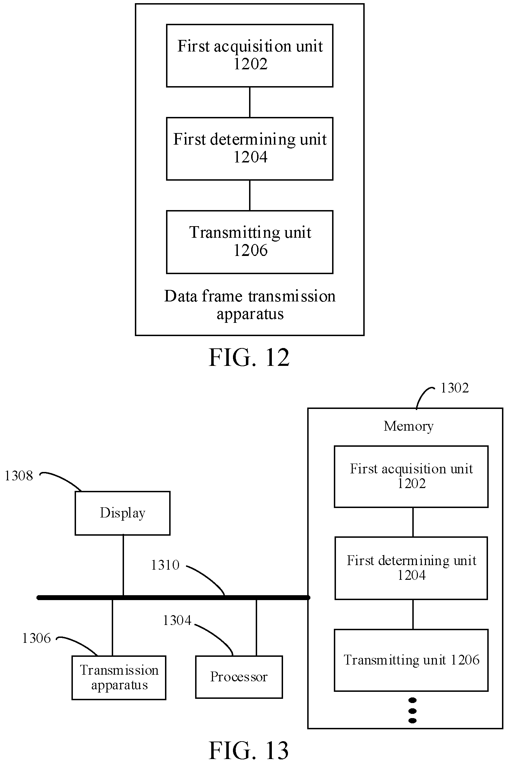

According to another aspect of an embodiment of this application, a data frame transmission apparatus for implementing the above data frame transmission method is further provided. FIG. 12 is a structural block diagram of a data frame transmission apparatus according to an embodiment of this application. As shown in FIG. 12, the apparatus includes:

a first acquisition unit 1202, configured to acquire a transmission duration of a target data frame in a process of transmitting, by a transmitting device, the target data frame to a receiving device through a first path;

a first determining unit 1204, configured to determine a first duration threshold according to a first group of state probabilities and a first group of stall condition probabilities, the first group of state probabilities including a probability that each transmission state in a first group of transmission states occurs in a first transmission state set, the first group of transmission states including different transmission states in the first transmission state set, the first transmission state set including a transmission state of each data frame in transmitted data frames, the transmitted data frames being data frames transmitted by the transmitting device to the receiving device before the target data frame is transmitted, and the first group of stall condition probabilities including: probabilities that data frames belonging to each transmission state in the first group of transmission states in the transmitted data frames stall; and

a transmitting unit 1206, configured to retransmit, in a case that the transmission duration of the target data frame is greater than or equal to the first duration threshold, the target data frame to the receiving device by the transmitting device through a second path, the second path being a backup path of the first path.

In some embodiments, the first determining unit includes:
a first determining module, configured to determine, in a preset duration threshold set according to the first group of state probabilities and the first group of stall condition probabilities, the first duration threshold that satisfies a first stall constraint condition and a first path constraint condition, where the first path constraint condition includes: a utilization rate, determined according to the first duration threshold, of the second path is less than or equal to a preset first utilization rate threshold; the first stall constraint condition includes: a stall rate, determined according to the first duration threshold, of the first path in a first duration threshold subset is minimum; the first duration threshold subset includes the first duration threshold; the first duration threshold subset is composed of duration thresholds that satisfy a first condition in the duration threshold set; and the first condition is that the utilization rate, determined according to the duration thresholds, of the second path is less than or equal to the preset first utilization rate threshold.

In some embodiments, the first determining unit includes:

a second determining module, configured to determine, in a preset duration threshold set according to the first group of state probabilities and the first group of stall condition probabilities, a first duration threshold subset that satisfies a first condition, where the first condition is that a utilization rate, determined according to duration thresholds, of the second path is less than or equal to a preset first utilization rate threshold; and

a third determining module, configured to determine, in the first duration threshold subset according to the first group of state probabilities and the first group of stall condition probabilities, the first duration threshold, where a stall rate, determined according to the first duration threshold, of the first path is minimum in the first duration threshold subset.

In some embodiments, the second determining module is further configured to:

determine through the following operations, in a case that the duration threshold set includes N duration thresholds and the transmission states include transmission durations, whether a $k^{th}$ duration threshold in the N duration thresholds satisfies the first condition, where k is a positive integer greater than or equal to 1 and less than or equal to N;

determine a $k^{th}$ utilization rate of the second path according to the first group of state probabilities and a $k^{th}$ group of retransmission parameters, where each retransmission parameter in the $k^{th}$ group of retransmission parameters is configured for indicating whether one transmission duration in M transmission durations is greater than the $k^{th}$ duration threshold, the M transmission durations includes different transmission durations in a first transmission duration set, the first transmission duration set includes a transmission duration of each data frame of the transmitted data frames, and M is a positive integer greater than or equal to 2; and

determine, in a case that the $k^{th}$ utilization rate is less than or equal to the preset first utilization rate threshold, that the $k^{th}$ duration threshold satisfies the first condition.

In some embodiments, the second determining module is further configured to:

correspondingly multiply, in a case that the first group of state probabilities includes M state probabilities and the $k^{th}$ group of retransmission parameters includes M retransmission parameters, the M state probabilities by the M retransmission parameters to obtain M first product values, where the first group of transmission states includes the M different transmission durations in the first transmission duration set, each retransmission parameter of the M retransmission parameters is configured for indicating whether one transmission duration in the M transmission durations is greater than the $k^{th}$ duration threshold, an $i^{th}$ first product value in the M first product values is equal to a value obtained by multiplying an $i^{th}$ state probability in the M state probabilities by an $i^{th}$ retransmission parameter in the M retransmission parameters, i is a positive integer greater than or equal to 1 and less than or equal to M, the $i^{th}$ state probability is a probability that an $i^{th}$ transmission duration in the M transmission durations occurs in the first transmission duration set, and the $i^{th}$ retransmission parameter is configured for indicating whether the $i^{th}$ transmission duration in the M transmission durations is greater than the $k^{th}$ duration threshold; and

determine the $k^{th}$ utilization rate of the second path to be equal to a sum of the M first product values.

In some embodiments, the apparatus further includes:

a first multiplying unit, configured to correspondingly multiply, in a case that the first group of state probabilities includes M state probabilities and the first group of stall condition probabilities includes M stall condition probabilities, the M state probabilities by the M stall condition probabilities to obtain M second product values, where the first group of transmission states includes the M different transmission durations in the first transmission duration set, the M stall condition probabilities include: a probability that a data frame having a transmission duration of the $i^{th}$ transmission duration in the transmitted data frames stalls, an $i^{th}$ second product value in the M second product values is equal to a value obtained by multiplying an $i^{th}$ state probability in the M state probabilities by an $i^{th}$ stall condition probability in the M stall conditional probabilities, i is a positive integer greater than or equal to 1 and less than or equal to M, the $i^{th}$ state probability is a probability that the $i^{th}$ transmission duration in the M transmission durations occurs in the first transmission duration set, and the i^th stall condition probability is configured for indicating a probability that a data frame having a transmission duration of the i^th transmission duration in the transmitted data frames stalls; and

a second multiplying unit, configured to multiply a sum of the M second product values by a preset coefficient to obtain the first utilization rate threshold.

In some embodiments, the third determining module is further configured to:

determine, in a case that the first duration threshold subset includes P duration thresholds and the transmission states include the transmission durations, a j^th stall rate of the first path according to a j^th duration threshold in the P duration thresholds through the following operation, j being a positive integer greater than or equal to 1 and less than or equal to P: determining the j^th stall rate according to the first group of stall condition probabilities, the first group of state probabilities, and a j^th group of retransmission parameters, each retransmission parameter in the j^th group of retransmission parameters being configured for indicating whether one transmission duration in the M transmission durations is greater than the j^th duration threshold, the M transmission durations including different transmission durations in the first transmission duration set, the first transmission duration set including the transmission duration of each data frame in the transmitted data frames, and M being a positive integer greater than or equal to 2; and

determine, from the P duration thresholds, a duration threshold at which a stall rate is minimum, to obtain the first duration threshold.

In some embodiments, the third determining module is further configured to:

correspondingly multiply, in a case that the first group of state probabilities includes M state probabilities, the first group of stall condition probabilities includes M stall condition probabilities, the j^th group of retransmission parameters includes M retransmission parameters, and a j^th group of path parameters includes M path parameters, the M stall condition probabilities, the M state probabilities, the M path parameters, and the M retransmission parameters, to obtain M third product values, the first group of transmission states including the M different transmission durations in the first transmission duration set, each retransmission parameter of the M retransmission parameters being configured for indicating whether one transmission duration in the M transmission durations is greater than the j^th duration threshold, each path parameter of the M path parameters being a path parameter, determined according to one transmission duration of the M transmission durations, of the second path, an i^th third product value in the M third product values being equal to a value obtained by multiplying an i^th stall condition probability in the M stall condition probabilities, an i^th state probability in the M state probabilities, and an i^th path parameter in the M path parameters by an i^th retransmission parameter in the M retransmission parameters, i being a positive integer greater than or equal to 1 and less than or equal to M, the i^th stall condition probability being configured for indicating a probability that a data frame having a transmission duration of an i^th transmission duration in the transmitted data frames stalls, the i^th state probability being a probability that the i^th transmission duration in the M transmission durations occurs in the first transmission duration set, the i^th retransmission parameter being configured for indicating whether the i^th transmission duration in the M transmission durations is greater than the j^th duration threshold, and the i^th path parameter being a path parameter, determined according to the i^th transmission duration in the M transmission durations, of the second path; and

determine the j^th stall rate to be equal to a sum of the M third product values.

In some embodiments, the apparatus further includes:
a second determining unit, configured to determine, in a case that the transmitting device transmits a group of detection frames to the receiving device through the second path and acquires the group of RTTs corresponding to the group of detection frames, the M path parameters according to a group of RTTs, the M transmission durations, and a preset target duration threshold, an i^th path parameter in the M path parameters being a path parameter determined according to the group of RTTs, the i^th transmission duration in the M transmission durations, and the target duration threshold.
In some embodiments, the second determining unit includes:
a fourth determining module, configured to determine the i^th path parameter according to the group of RTTs, the i^th transmission duration in the M transmission durations, and the target duration threshold through the following operations:

subtracting, in a case that the group of detection frames includes Q detection frames and the group of RTTs includes Q RTTs, the i^th transmission duration from the target duration threshold to obtain an i^th duration difference, Q being a positive integer greater than or equal to 2, and the Q RTTs including an RTT corresponding to each detection frame of the Q detection frames; and

dividing an $i^{th}$ quantity by Q in a case that a quantity of RTTs less than or equal to the $i^{th}$ duration difference in the Q RTTs is the $i^{th}$ quantity, to obtain the $i^{th}$ path parameter.

In some embodiments, the apparatus further includes:

a third determining unit, configured to determine a plurality of data frames transmitted by the transmitting device to the receiving device and acknowledged to be received by the receiving device as the transmitted data frames within a first preset time period before the transmitting device transmits the target data frame; and acquire a first group of transmission states corresponding to the transmitted data frames;

a fourth determining unit, configured to determine a ratio of a quantity of data frames in each transmission state in the first group of transmission states to a total quantity of the transmitted data frames as a probability that a corresponding transmission state occurs in a first transmission state set to obtain a first group of state probabilities; and

a fifth determining unit, configured to determine a ratio of a quantity of data frames that stall in each transmission state in the first group of transmission states to the total quantity of the transmitted data frames as a stall probability that stall occurs in a corresponding transmission state to obtain a group of stall probabilities; and determine a product of a stall probability and a state probability that correspond to each transmission state in the first group of transmission states as a stall condition probability of the corresponding transmission state to obtain a first group of stall condition probabilities.

In some embodiments, the apparatus further includes:

a second acquisition unit, configured to acquire a path duration of a target data frame in a process of transmitting, by the transmitting device, the target data frame to the receiving device through the first path, the path duration of each data frame being a maximum transmission duration of data frames that are being transmitted on the first path when a corresponding data frame enters the first path;

a sixth determining unit, configured to determine a second duration threshold according to a second group of state probabilities and a second group of stall condition probabilities, the second group of state probabilities including a probability that each path state in a second group of path states occurs in a second path state set, the second group of path states including different path states in the second path state set, the second path state set including a path state of the first path when each data frame in the transmitted data frames enters the first path, the transmitted data frames being data frames transmitted by the transmitting device to the receiving device before the target data frame is transmitted, and the second group of stall condition probabilities including: probabilities that data frames belonging to each path state in the second group of path states in the transmitted data frames stall; and

a switching unit, configured to switch, in a case that the path duration of the target data frame is greater than or equal to the second duration threshold and a current RTT of the second path is less than an RTT of the first path, a path for transmitting data frames between the transmitting device and the receiving device from the first path to the second path, the second path being a backup path of the first path.

In some embodiments, the sixth determining unit includes:
a fifth determining module, configured to determine, in a preset duration threshold set according to the second group of state probabilities and the second group of stall condition probabilities, the second duration threshold that satisfies a second stall constraint condition and a second path constraint condition, the second path constraint condition including that a utilization rate, determined according to the second duration threshold, of the second path is less than or equal to a preset second utilization rate threshold, the second stall constraint condition including that a stall rate, determined according to the second duration threshold, of the first path in a second duration threshold subset is minimum, the second duration threshold subset including the second duration threshold, the second duration threshold subset being composed of duration thresholds that satisfy a second condition in the duration threshold set, and the second condition being that the utilization rate, determined according to the duration thresholds, of the second path is less than or equal to the preset second utilization rate threshold.
In some embodiments, the sixth determining unit includes:

a sixth determining module, configured to determine, in the preset duration threshold set according to the second group of state probabilities and the second group of stall condition probabilities, a second duration threshold subset that satisfies the second condition, the second condition being that a utilization rate, determined according to duration thresholds, of the second path is less than or equal to the preset second utilization rate threshold; and

a seventh determining module, configured to determine, in the second duration threshold subset according to the second group of state probabilities and the second group of stall condition probabilities, the second duration threshold, a stall rate, determined according to the second duration threshold in the second duration threshold subset, of the first path being minimum.

In some embodiments, the sixth determining module is configured to:

determine through the following operations, in a case that the duration threshold set includes R duration thresholds and the path states include path durations, whether a $t^{th}$ duration threshold in the R duration thresholds satisfies the second condition, t being a positive integer greater than or equal to 1 and less than or equal to R:

determining a $t^{th}$ utilization rate of the second path according to the second group of state probabilities and a $t^{th}$ group of switching parameters, each switching parameter in the $t^{th}$ group of switching parameters being configured for indicating whether one path duration in Y path durations is greater than the $t^{th}$ duration threshold, the Y path durations including different path durations in a second path duration set, the second path duration set including a path duration of each data frame of the transmitted data frames, and Y being a positive integer greater than or equal to 2; and

determining, in a case that the $t^{th}$ utilization rate is less than or equal to the preset second utilization rate threshold, that the $t^{th}$ duration threshold satisfies the second condition.

In some embodiments, the apparatus further includes:

a seventh determining unit, configured to determine a plurality of data frames transmitted by the transmitting device to the receiving device and acknowledged to be received by the receiving device as the transmitted data frames within a second preset time period before the transmitting device transmits the target data frame; and acquire a second group of path states corresponding to the transmitted data frames;

an eighth determining unit, configured to determine a ratio of a quantity of data frames in each path state in the second group of path states to a total quantity of the transmitted data frames as a probability that a corresponding path state occurs in a second path state set to obtain the second group of state probabilities; and

a ninth determining unit, configured to determine a ratio of a quantity of data frames that stall in each path state in the second group of path states to the total quantity of the transmitted data frames as a stall probability that stall occurs in a corresponding path state to obtain a group of stall probabilities; and determine a ratio of a stall probability and a state probability that correspond to each path state in the second group of path states as a stall condition probability of the corresponding path state to obtain a second group of stall condition probabilities.

According to another aspect of an embodiment of this application, an electronic device for implementing the data frame transmission method is further provided. The electronic device may be a terminal device or a server as shown in FIG. 1. In this embodiment of this application, an example in which the electronic device is the server is taken for description. FIG. 13 is a schematic structural diagram of an electronic device according to an embodiment of this application. As shown in FIG. 13, the electronic device includes a memory 1302 and a processor 1304. The memory 1302 has a computer program stored therein. The processor 1304 is configured to perform operations in any method embodiment through the computer program.

In the embodiments of this application, the electronic device may be located in at least one network device of a plurality of network devices in a computer network.

In the embodiments of this application, the processor may be configured to perform the following operations through the computer program:

S1: Acquire a transmission duration of a target data frame in a process of transmitting, by a transmitting device, the target data frame to a receiving device through a first path;

S2: Determine a first duration threshold according to a first group of state probabilities and a first group of stall condition probabilities, the first group of state probabilities including a probability that each transmission state in a first group of transmission states occurs in a first transmission state set, the first group of transmission states including different transmission states in the first transmission state set, the first transmission state set including a transmission state of each data frame in transmitted data frames, the transmitted data frames being data frames transmitted by the transmitting device to the receiving device before the target data frame is transmitted, and the first group of stall condition probabilities including: probabilities that data frames belonging to each transmission state in the first group of transmission states in the transmitted data frames stall; and

S3: Retransmit, in a case that the transmission duration of the target data frame is greater than or equal to the first duration threshold, the target data frame to the receiving device by the transmitting device through a second path, the second path being a backup path of the first path.

In some embodiments, for a person ordinary skilled in the art, a structure shown in FIG. 13 is merely an example. An electronic apparatus and an electronic device may alternatively be terminal devices such as smartphones (such as Android phones, and iOS phones), tablet computers, personal digital assistants, MIDs, or PADs. FIG. 13 does not limit the structures of the electronic apparatus and the electronic device. For example, the electronic apparatus and the electronic device may further include more or fewer assemblies (for example, a network interface) than those shown in FIG. 13, or have a configuration different from that shown in FIG. 13.

Where the memory 1302 may be configured to store software programs and modules, such as program instructions/modules corresponding to the data frame transmission method and apparatus in the embodiments of this application. The processor 1304 executes the software programs and the modules stored in the memory 1302 to perform various function applications and data processing, i.e., to implement the data frame transmission method. The memory 1302 may include a high-speed random memory, or may include a non-volatile memory, such as one or more magnetic storage apparatuses, a flash memory, or another non-volatile solid-state memory. In some embodiments, the memory 1302 may further include memories remotely arranged relative to the processor 1304, and the remote memories may be connected to a terminal through a network. Examples of the network include, but are not limited to, Internet, Intranet, a local area network, a mobile communication network, and a combination thereof. Where the memory 1302 may be specifically, but is not limited to, configured to store information such as sample features of items and target virtual resource accounts. For example, as shown in FIG. 13, the memory 1302 may include, but is not limited to, the first acquisition unit 1202, the first determining unit 1204, and the transmitting unit 1206 in the data frame transmission apparatus. In addition, the memory may further include, but is not limited to, other module units in the data frame transmission apparatus. Details are not described again in this example.

In some embodiments, a transmission apparatus 1306 is configured to receive or transmit data through a network. Specific examples of the network may include a wired network and a wireless network. In an example, the transmission apparatus 1306 includes a network interface controller (NIC). The NIC may be connected to other network devices and routers through a network cable, so as to communicate with the Internet or the local area network. In an example, the transmission apparatus 1306 is a radio frequency (RF) module configured to wirelessly communicate with the Internet.

In addition, the electronic device further includes: a display 1308 configured to display order information to be processed; and a connection bus 1310 configured to connect various modular components in the electronic device.

In other embodiments, the terminal device or the server may be a node in a distributed system, where the distributed system may be a blockchain system. The blockchain system may be a distributed system formed by a plurality of nodes connected in the form of network communication. Where a peer to peer network may be formed between the nodes. Any form of a computing device, such as the server, the terminal, and other electronic devices, may become a node in the blockchain system by joining the peer to peer network.

An embodiment of this application provides a computer program product, including computer programs/instructions, the computer programs/instructions including program codes configured for performing the methods shown in flowcharts. In this embodiment, the computer programs may be downloaded and installed from a network through a communication portion 1409, and/or installed from a removable medium 1411. When the computer programs are executed by a central processing unit 1401, various functions provided in the embodiments of this application are executed.

The sequence numbers of the foregoing embodiments of this application are merely for description purposes but do not imply the preference among the embodiments.

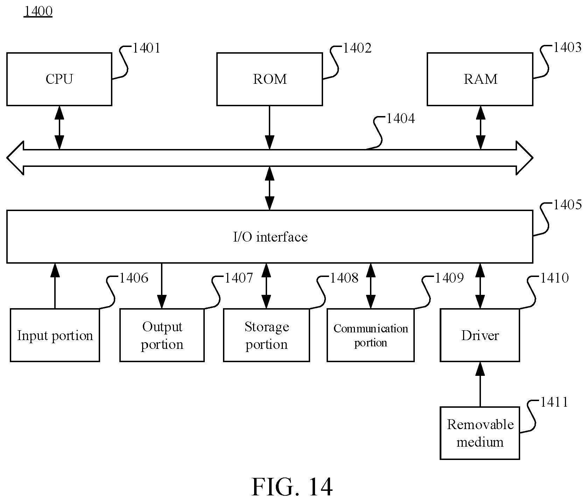

FIG. 14 is a structural block diagram of a computer system of an electronic device according to an embodiment of this application.

A computer system 1400 of the electronic device shown in FIG. 14 is merely an example, and is not to constitute any limitation on functions and use scopes of the embodiments of this application.

As shown in FIG. 14, the computer system 1400 includes a central processing unit (CPU) 1401 which may perform various appropriate actions and processing according to programs stored in a read-only memory (ROM) 1402 or programs loaded into a random access memory (RAM) 1403 from a storage portion 1408. Various programs and data required by system operation are further stored in the RAM 1403. The CPU 1401, the ROM 1402, and the RAM 1403 are connected to each other through a bus 1404. An input/output interface 1405 (i.e., an I/O interface) is also connected to the bus 1404.

The following components are connected to the I/O interface 1405: an input portion 1406, including a keyboard, a mouse, and the like; an output portion 1407, including a cathode ray tube (CRT), a liquid crystal display (LCD), a loudspeaker, and the like; the storage portion 1408, including a hard disk, and the like; and the communication portion 1409, including a network interface card such as a local area network card and a modem. The communication portion 1409 performs communication processing through a network such as Internet. A driver 1410 is also connected to the I/O interface 1405 as required. The removable medium 1411, such as a magnetic disc, an optical disc, a magneto-optical disc and a semiconductor memory, is installed on the driver 1410 as required, for installing computer programs which are read from the removable medium into the storage portion 1408 as required.

Particularly, according to the embodiments of this application, processes described in method flowcharts may be implemented as computer software programs. For example, an embodiment of this application includes a computer program product including computer programs carried on a computer-readable medium, the computer programs including program codes configured for performing methods shown in flowcharts. In this embodiment, the computer programs may be downloaded and installed from a network through the communication portion 1409, and/or installed from the removable medium 1411. When the computer programs are performed by the CPU 1401, various functions limited in a system of this application are performed.

According to one aspect of this application, a computer-readable storage medium is provided. A processor of a computer device reads computer instructions from the computer-readable storage medium and executes the computer instructions, to cause the computer device to perform the data frame transmission method provided in the above various exemplary implementations.

In the embodiments of this application, the computer-readable storage medium may be configured to store computer programs for executing the following operations:

S1: Acquire a transmission duration of a target data frame in a process of transmitting, by a transmitting device, the target data frame to a receiving device through a first path;

S2: Determine a first duration threshold according to a first group of state probabilities and a first group of stall condition probabilities, the first group of state probabilities including a probability that each transmission state in a first group of transmission states occurs in a first transmission state set, the first group of transmission states including different transmission states in the first transmission state set, the first transmission state set including a transmission state of each data frame in transmitted data frames, the transmitted data frames being data frames transmitted by the transmitting device to the receiving device before the target data frame is transmitted, and the first group of stall condition probabilities including: probabilities that data frames belonging to each transmission state in the first group of transmission states in the transmitted data frames stall; and

S3: Retransmit, in a case that the transmission duration of the target data frame is greater than or equal to the first duration threshold, the target data frame to the receiving device by the transmitting device through a second path, the second path being a backup path of the first path.

In the embodiments of this application, for a person ordinary skilled in the art, all or some of operations in various methods of the above embodiments are completed through programs that instruct relevant hardware of a terminal device. The programs may be stored in a computer-readable storage medium. The storage medium may include: a flash drive, a read-only memory (ROM), a random access memory (RAM), a magnetic disk, an optical disc, or the like.

When implemented in the form of a software functional unit and sold or used as an independent product, an integrated unit in the above embodiment may be stored in the above computer-readable storage medium. Based on such understanding, the technical solutions of the embodiments of this application may be reflected in the form of a software product in essence or in a part of making a contribution to the related art, or all or a part of the technical solutions. A computer software product is stored in a storage medium, including a plurality of instructions to enable one or more computer devices (which may be a personal computer, a server, or a network device) to execute all or some operations of the embodiment methods in the embodiments of this application.

In the above embodiments in the embodiments of this application, the description of the embodiments has the emphasis. For the part not detailed in one embodiment, the related description of other embodiments may be referred to.

In several embodiments provided in this application, the disclosed client may be implemented in other modes. Where apparatus embodiments described above are only illustrative. For example, division of the units is only logical function division, and an additional division mode may exist during actual implementation. For example, a plurality of units or assemblies may be combined or may be integrated into another system, or some features may be neglected or not performed. In addition, coupling or direct coupling or communication connection between displayed or discussed components may be indirect coupling or communication connection through a plurality of interfaces, units, or modules, and may be electrical or in other forms.

Units described as separated components may be or may not be separated physically, and components displayed as units may be or may not be physical units, i.e., the components may be located at one place or may be distributed on a plurality of network units. The purpose of the solution in this embodiment of this application may be achieved by selecting some or all units according to actual needs.

In addition, functional units of the embodiments in the embodiments of this application may be integrated in a processing unit, or the units may physically exist individually, or two or more than two units may be integrated in one unit. The integrated unit may be realized in the form of hardware or may be realized in the form of a software functional unit.

The above descriptions are only exemplary implementations of the embodiments of this application. For a person ordinary skilled in the art, several improvements and modifications may be made without departing from the principles of the embodiments of this application, and these improvements and modifications are also to be deemed to fall within the protection scope of the embodiments of this application.

## Claims

1. A data frame transmission method, performed by an electronic device, and comprising:

   acquiring a transmission duration of a target data frame which is being transmitted currently by a transmitting device to a receiving device through a first path;
   determining a first duration threshold according to a first group of state probabilities and a first group of stall condition probabilities, the first group of state probabilities comprising a probability of each transmission state value in a first value group of transmission states occurring in a first transmission state set, the first value group of transmission states comprising at least one transmission state value in the first transmission state set, the first transmission state set comprising transmission state of each transmitted data frame, a transmitted data frame being a data frame that has been transmitted by the transmitting device to the receiving device before the target data frame, and the first group of stall condition probabilities comprising: for each transmission state value in the first value group of transmission states, a probability of at least one transmitted data frames having the transmission state value stalling during transmitting; and
   retransmitting, in a case that the transmission duration of the target data frame is greater than or equal to the first duration threshold, the target data frame to the receiving device by the transmitting device through a second path, the second path being a backup path of the first path.

2. The method according to claim 1, wherein the determining a first duration threshold according to a first group of state probabilities and a first group of stall condition probabilities comprises:

   determining, in a preset duration threshold set and according to the first group of state probabilities and the first group of stall condition probabilities, the first duration threshold that satisfies a first stall constraint condition and a first path constraint condition;
   wherein the first path constraint condition comprises: a utilization rate, determined according to the first duration threshold, of the second path is less than or equal to a preset first utilization rate threshold; the first stall constraint condition comprises: a stall rate, determined according to the first duration threshold, of the first path in a first duration threshold subset is minimum; the first duration threshold subset comprises the first duration threshold and is composed of duration thresholds each satisfying a first condition in the preset duration threshold set; and the first condition is that a utilization rate, determined according to a duration threshold in the first duration threshold subset, of the second path is less than or equal to the preset first utilization rate threshold.

3. The method according to claim 1, wherein the determining a first duration threshold according to a first group of state probabilities and a first group of stall condition probabilities comprises:

   determining, in a preset duration threshold set and according to the first group of state probabilities and the first group of stall condition probabilities, a first duration threshold subset that satisfies a first condition, the first condition is that a utilization rate, determined according to a duration threshold in the first duration threshold subset, of the second path is less than or equal to the preset first utilization rate threshold; and
   determining, in the first duration threshold subset and according to the first group of state probabilities and the first group of stall condition probabilities, the first duration threshold, a stall rate, determined according to the first duration threshold, of the first path being minimum in the first duration threshold subset.

4. The method according to claim 3, wherein the preset duration threshold set comprises N duration thresholds, the transmission state is a transmission duration, and the determining, in a preset duration threshold set and according to the first group of state probabilities and the first group of stall condition probabilities, a first duration threshold subset that satisfies a first condition comprises:
determining whether a $k^{th}$ duration threshold in the N duration thresholds satisfies the first condition through the following operations, k being a positive integer greater than or equal to 1 and less than or equal to N:

determining a $k^{th}$ utilization rate of the second path according to the first group of state probabilities and a $k^{th}$ group of retransmission parameters, each retransmission parameter in the $k^{th}$ group of retransmission parameters being configured for indicating whether one transmission duration in M transmission duration values is greater than the $k^{th}$ duration threshold, the M transmission duration values comprising transmission duration values in a first transmission duration set and are different from each other, the first transmission duration set comprising a transmission duration of each transmitted data frames, and M being a positive integer greater than or equal to 2; and
determining, in a case that the $k^{th}$ utilization rate is less than or equal to the preset first utilization rate threshold, that the $k^{th}$ duration threshold satisfies the first condition.

5. The method according to claim 4, wherein the first group of state probabilities comprises M state probability values, the $k^{th}$ group of retransmission parameters comprises M retransmission parameters, and the determining a $k^{th}$ utilization rate of the second path according to the first group of state probabilities and a $k^{th}$ group of retransmission parameters comprises:

for an $i^{th}$ state probability value of the M state probability values, multiplying the $i^{th}$ state probability value by a corresponding retransmission parameter of the M retransmission parameters to obtain an $i^{th}$ first product value, the first value group of transmission states comprising the M transmission duration values in the first transmission duration set which are different from each other, each retransmission parameter of the M retransmission parameters being configured for indicating whether a corresponding transmission duration value in the M transmission duration values is greater than the $k^{th}$ duration threshold, i being a positive integer greater than or equal to 1 and less than or equal to M, and the $i^{th}$ state probability value being a probability that an $i^{th}$ transmission duration value in the M transmission duration values occurs in the first transmission duration set; and
determining the $k^{th}$ utilization rate of the second path to be equal to a sum of M first product values.

6. The method according to claim 4, the first group of state probabilities comprises M state probability values, the first group of stall condition probabilities comprises M stall condition probabilities, and the method further comprises:

for an $i^{th}$ state probability value of the M state probability values, multiplying the $i^{th}$ state probability value by a corresponding stall condition probability to obtain an $i^{th}$ second product value, the first value group of transmission states comprising the M transmission duration values in the first transmission duration set which are different from each other, each stall condition probability of the M stall condition probabilities being a probability that transmitted data frames having a same transmission duration value stalls, i being a positive integer greater than or equal to 1 and less than or equal to M, and the $i^{th}$ state probability value being a probability value that the $i^{th}$ transmission duration value in the M transmission duration values occurs in the first transmission duration set; and
multiplying a sum of M second product values by a preset coefficient to obtain the first utilization rate threshold.

7. The method according to claim 3, wherein the first duration threshold subset comprises P duration thresholds, the transmission state is the transmission duration, and the determining, in a preset duration threshold set and according to the first group of state probabilities and the first group of stall condition probabilities, a first duration threshold subset that satisfies a first condition comprises:

determining a $j^{th}$ stall rate of the first path according to a $j^{th}$ duration threshold in the P duration thresholds through the following operation, j being a positive integer greater than or equal to 1 and less than or equal to P: determining the $j^{th}$ stall rate according to the first group of stall condition probabilities, the first group of state probabilities, and a $j^{th}$ group of retransmission parameters, each retransmission parameter in the $j^{th}$ group of retransmission parameters being configured for indicating whether one transmission duration value in M transmission duration values is greater than the $j^{th}$ duration threshold, the M transmission duration values are M transmission duration values in the first transmission duration set and are different from each other, the first transmission duration set comprising the transmission duration of each transmitted data frame, and M being a positive integer greater than or equal to 2; and

determining, from P duration thresholds, a duration threshold at which a stall rate is minimum as the first duration threshold.

8. The method according to claim 7, wherein the first group of state probabilities comprises M state probability values, the first group of stall condition probabilities comprises M stall condition probabilities, the $j^{th}$ group of retransmission parameters comprises M retransmission parameters, and the determining the $j^{th}$ stall rate according to the first group of stall condition probabilities, the first group of state probabilities, and a $j^{th}$ group of retransmission parameters comprises:

for an $i^{th}$ state probability value, multiplying the $i^{th}$ state probability value , a corresponding stall condition probability, a corresponding path parameters, and a corresponding retransmission parameter, to obtain an $i^{th}$ third product values, the first value group of transmission states comprising M transmission duration values in the first transmission duration set which are different from each other, each retransmission parameter of the M retransmission parameters being configured for indicating whether one transmission duration value in the M transmission duration values is greater than the $j^{th}$ duration threshold, each path parameter of the M path parameters being a path parameter, determined according to one transmission duration value of the M transmission duration values, of the second path, i being a positive integer greater than or equal to 1 and less than or equal to M, the $i^{th}$ stall condition probability being configured for indicating a probability that at least one transmitted data frame having the $i^{th}$ transmission duration value stalls, the $i^{th}$ state probability value being a probability that the $i^{th}$ transmission duration value in the M transmission duration values occurs in the first transmission duration set, the $i^{th}$ retransmission parameter being configured for indicating whether the $i^{th}$ transmission duration value in the M transmission duration values is greater than the $j^{th}$ duration threshold, and the $i^{th}$ path parameter being a path parameter, determined according to the $i^{th}$ transmission duration value in the M transmission duration values, of the second path; and

determining the $j^{th}$ stall rate to be equal to a sum of M third product values.

9. The method according to claim 8, further comprising:
for the $i^{th}$ transmission duration value, determining, in a case that the transmitting device transmits a group of detection frames to the receiving device through the second path and acquires a group of round-trip times, RTTs, corresponding to the group of detection frames, the $i^{th}$ path parameter according to the group of RTTs, the $i^{th}$ transmission duration value, and a preset target duration threshold.

10. The method according to claim 9, wherein the group of detection frames comprises Q detection frames, the group of RTTs comprises Q RTTs, and the for the $i^{th}$ transmission duration value, determining the $i^{th}$ path parameter according to the group of RTTs, the $i^{th}$ transmission duration value, and a preset target duration threshold comprises:

for the $i^{th}$ transmission duration value, subtracting the $i^{th}$ transmission duration value from the target duration threshold to obtain an $i^{th}$ duration difference, Q being a positive integer greater than or equal to 2, and the Q RTTs comprising an RTT corresponding to each detection frame of the Q detection frames; and

dividing i by Q in a case that a quantity of RTTs less than or equal to the $i^{th}$ duration difference in the Q RTTs equals to i, to obtain the $i^{th}$ path parameter.

11. The method according to any one of claims 1 to 10, further comprising:

determining a plurality of data frames transmitted by the transmitting device to the receiving device and acknowledged to have been received by the receiving device as the transmitted data frames within a first preset time period before the transmitting device transmits the target data frame; and acquiring the first value group of transmission states corresponding to the transmitted data frames;

determining a ratio of a quantity of transmitted data frames having each transmission state value in the first value group of transmission states to a total quantity of the transmitted data frames as a probability that the transmission state value occurs in the first transmission state set, to obtain the first group of state probabilities; and

determining a ratio of a quantity of transmitted data frames that stall in each transmission state value in the first value group of transmission states to the total quantity of the transmitted data frames as a stall probability that stall occurs in the transmission state, to obtain a group of stall probabilities; and for each transmission state value in the first value group of transmission states, determining a product of a stall probability and a state probability that correspond to the transmission state value in the first value group of transmission states as a stall condition probability of the transmission state value, so as to obtain the first group of stall condition probabilities.

12. The method according to any one of claims 1 to 11, further comprising:

acquiring a path duration of the target data frame in a process of transmitting, by the transmitting device, the target data frame to the receiving device through the first path, a path duration of a data frame being a maximum transmission duration among data frames that are being transmitted on the first path when the data frame begins to be transmitted through the first path;

determining a second duration threshold according to a second group of state probabilities and a second group of stall condition probabilities, the second group of state probabilities comprising a probability that each path state value in a second value group of path states occurs in a second path state set, the second value group of path states comprising path state value in the second path state set that are different from each other, the second path state set comprising a path state of the first path when each data frame in the transmitted data frames begins to be transmitted through the first path, and the second group of stall condition probabilities comprising: for each path state value in the second value group of path states, a probability of at least one transmitted data frame having the path state value in the transmitted data frames stalling; and

switching, in a case that the path duration of the target data frame is greater than or equal to the second duration threshold and a current RTT of the second path is less than an RTT of the first path, a transmitting path between the transmitting device and the receiving device from the first path to the second path, the second path being the backup path of the first path.

13. The method according to claim 12, wherein the determining a second duration threshold according to a second group of state probabilities and a second group of stall condition probabilities comprises:

determining, in a preset duration threshold set and according to the second group of state probabilities and the second group of stall condition probabilities, the second duration threshold that satisfies a second stall constraint condition and a second path constraint condition, the second path constraint condition comprising that a utilization rate, determined according to the second duration threshold, of the second path is less than or equal to a preset second utilization rate threshold, the second stall constraint condition comprising that a stall rate, determined according to the second duration threshold, of the first path in a second duration threshold subset is minimum, the second duration threshold subset comprising the second duration threshold and composed of duration thresholds that satisfy a second condition in the preset duration threshold set, and the second condition being that the utilization rate, determined according to a duration threshold in the second duration threshold subset, of the second path is less than or equal to the preset second utilization rate threshold.

14. The method according to claim 12 or 13, wherein the determining a second duration threshold according to a second group of state probabilities and a second group of stall condition probabilities comprises:

determining, in the preset duration threshold set according to the second group of state probabilities and the second group of stall condition probabilities, a second duration threshold subset that satisfies the second condition, the second condition being that the utilization rate, determined according to a duration threshold in the second duration threshold subset, of the second path is less than or equal to the preset second utilization rate threshold; and

determining, in the second duration threshold subset and according to the second group of state probabilities and the second group of stall condition probabilities, the second duration threshold, a stall rate, determined according to the second duration threshold in the second duration threshold subset, of the first path being minimum.

15. The method according to claim 14, wherein the duration threshold set comprises R duration thresholds, the path state is a path duration, the determining, in the preset duration threshold set and according to the second group of state probabilities and the second group of stall condition probabilities, a second duration threshold subset that satisfies the second condition comprises:

for a $t^{th}$ duration threshold in the R duration thresholds, determining through the following operations whether the $t^{th}$ duration threshold satisfies the second condition, t being a positive integer greater than or equal to 1 and less than or equal to R:

determining a $t^{th}$ utilization rate of the second path according to the second group of state probabilities and a $t^{th}$ group of switching parameters, each switching parameter in the $t^{th}$ group of switching parameters being configured for indicating whether one path duration value in Y path duration values is greater than the $t^{th}$ duration threshold, the Y path duration values comprising duration values in a second path duration set that are different from each other, the second path duration set comprising a path duration of each transmitted data frame, and Y being a positive integer greater than or equal to 2; and

determining, in a case that the $t^{th}$ utilization rate is less than or equal to the preset second utilization rate threshold, that the $t^{th}$ duration threshold satisfies the second condition.

16. The method according to any one of claims 12 to 15, further comprising:

determining a plurality of data frames transmitted by the transmitting device to the receiving device and acknowledged to have been be received by the receiving device as the transmitted data frames within a second preset time period before the transmitting device transmits the target data frame; and acquiring the second value group of path states corresponding to the transmitted data frames;

determining a ratio of a quantity of transmitted data frames having each path state value in the second value group of path states to a total quantity of the transmitted data frames as a probability that the path state value occurs in the second path state set, to obtain the second group of state probabilities; and

determining a ratio of a quantity of transmitted data frames that stall in each path state value in the second value group of path states to the total quantity of the transmitted data frames as a stall probability that stall occurs in the path state value, to obtain a group of stall probabilities; and for each path state value in the second value group of path states, determining a ratio of the stall probability and a state probability that correspond to the path state value as a stall condition probability of the path state value, so as to obtain the second group of stall condition probabilities.

17. A data frame transmission apparatus, comprising:

a first acquisition unit, configured to acquire a transmission duration of a target data frame in a process of transmitting, by a transmitting device, the target data frame to a receiving device through a first path;

a first determining unit, configured to determine a first duration threshold according to a first group of state probabilities and a first group of stall condition probabilities, the first group of state probabilities comprising a probability that each transmission state in a first group of transmission states occurs in a first transmission state set, the first group of transmission states comprising different transmission states in the first transmission state set, the first transmission state set comprising a transmission state of each data frame in transmitted data frames, the transmitted data frames being data frames transmitted by the transmitting device to the receiving device before the target data frame is transmitted, and the first group of stall condition probabilities comprising: probabilities that data frames belonging to each transmission state in the first group of transmission states in the transmitted data frames stall; and

a transmitting unit, configured to retransmit, in a case that the transmission duration of the target data frame is greater than or equal to the first duration threshold, the target data frame to the receiving device by the transmitting device through a second path, the second path being a backup path of the first path.

18. A computer-readable storage medium, comprising a stored program which, when running, implements the data frame transmission method according to any one of claims 1 to 16.

19. A computer program product, comprising computer programs/instructions, the computer programs/instructions, when executed by a processor, implementing operations of the data frame transmission method according to any one of claims 1 to 16.

20. An electronic device, comprising a memory and a processor, the memory having computer programs stored therein, and the processor being configured to implement the data frame transmission method according to any one of claims 1 to 16 through computer programs.

FIG. 1

FIG. 2

FIG. 3

Acquire a transmission duration of a target data frame in a process of transmitting, by a transmitting device, the target data frame to a receiving device through a first path ⟩ S12

Determine a first duration threshold according to a first group of state probabilities and a first group of stall condition probabilities, the first group of state probabilities including a probability that each transmission state in a first group of transmission states occurs in a first transmission state set, the first group of transmission states including different transmission states in the first transmission state set, the first transmission state set including a transmission state of each data frame in transmitted data frames, the transmitted data frames being data frames transmitted by the transmitting device to the receiving device before the target data frame is transmitted, and the first group of stall condition probabilities including: probabilities that data frames belonging to each transmission state in the first group of transmission states in the transmitted data frames stall ⟩ S14

Retransmit, in a case that the transmission duration of the target data frame is greater than or equal to the first duration threshold, the target data frame to the receiving device by the transmitting device through a second path, the second path being a backup path of the first path ⟩ S16

FIG. 4

FIG. 5

FIG. 6

FIG. 7

FIG. 8

(a) Median data frame transmission delay

(b) Frame stall rate

(c) Cellular data utilization rate

FIG. 9

(a) Data frame transmission delay

(b) Frame stall rate

(c) Cellular data utilization rate

FIG. 10

EP 4 772 254 A1

(a) Data frame transmission delay     (b) Frame stall rate     (c) Cellular data utilization rate     (d) User retention time

FIG. 11

First acquisition unit
1202

First determining unit
1204

Transmitting unit
1206

Data frame transmission
apparatus

FIG. 12

1302

Memory

First acquisition unit
1202

First determining unit
1204

Transmitting unit 1206

1308

Display

1310

1304

1306

Transmission
apparatus

Processor

FIG. 13

1400

| CPU | 1401 |  | ROM | 1402 |  | RAM | 1403 |

1404

I/O interface — 1405

| Input portion | 1406 | Output portion | 1407 | Storage portion | 1408 | Communication portion | 1409 | Driver | 1410 |

Removable medium — 1411

# FIG. 14

## INTERNATIONAL SEARCH REPORT

| | |
|---|---|
| International application No. | **PCT/CN2024/114532** |

| A. | CLASSIFICATION OF SUBJECT MATTER |
|---|---|

A63F13/77(2014.01)i

According to International Patent Classification (IPC) or to both national classification and IPC

| B. | FIELDS SEARCHED |
|---|---|

Minimum documentation searched (classification system followed by classification symbols)

IPC: A63F

Documentation searched other than minimum documentation to the extent that such documents are included in the fields searched

Electronic data base consulted during the international search (name of data base and, where practicable, search terms used)

CNTXT, ENTXT, VEN, CJFD: 数据帧, 传输, 时长, 阈值, 卡顿, 延时, 概率, 路径, 重新发送, data frame, transmission, duration, threshold, lag, delay, probability, path, retransmit, resend, send again

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117298600 A (TENCENT TECHNOLOGY (SHENZHEN) CO., LTD.) 29 December 2023 (2023-12-29) description, paragraphs 83-354, and figures 1-14 | 1-20 |
| A | CN 104967813 A (MA YAN) 07 October 2015 (2015-10-07) description, paragraphs 20-32, and figures 1-2 | 1-20 |
| A | CN 101753244 A (DATANG MOBILE COMMUNICATIONS EQUIPMENT CO., LTD.) 23 June 2010 (2010-06-23) entire document | 1-20 |
| A | CN 102316499 A (ZTE CORP.) 11 January 2012 (2012-01-11) entire document | 1-20 |
| A | CN 105490933 A (THE 54TH RESEARCH INSTITUTE OF CHINA ELECTRONIC TECHNOLOGY GROUP CORP. et al.) 13 April 2016 (2016-04-13) entire document | 1-20 |
| A | CN 108319974 A (TENCENT TECHNOLOGY (SHENZHEN) CO., LTD.) 24 July 2018 (2018-07-24) entire document | 1-20 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 October 2024** | **15 November 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/114532** |

### C. DOCUMENTS CONSIDERED TO BE RELEVANT

| Category* | Citation of document, with indication, where appropriate, of the relevant passages | Relevant to claim No. |
| --- | --- | --- |
| A | CN 110418170 A (TENCENT TECHNOLOGY (SHENZHEN) CO., LTD.) 05 November 2019 (2019-11-05)<br>entire document | 1-20 |
| A | CN 111107440 A (TENCENT TECHNOLOGY (SHENZHEN) CO., LTD.) 05 May 2020 (2020-05-05)<br>entire document | 1-20 |
| A | CN 115767143 A (ALIBABA (CHINA) CO., LTD.) 07 March 2023 (2023-03-07)<br>entire document | 1-20 |
| A | US 2009290487 A1 (FUJITSU LTD.) 26 November 2009 (2009-11-26)<br>entire document | 1-20 |
| A | WO 2008097254 A1 (MBARQ HOLDINGS CO., LLC. et al.) 14 August 2008 (2008-08-14)<br>entire document | 1-20 |

Form PCT/ISA/210 (second sheet) (July 2022)

| INTERNATIONAL SEARCH REPORT<br>Information on patent family members | | | International application No.<br>**PCT/CN2024/114532** |

| Patent document<br>cited in search report | | | Publication date<br>(day/month/year) | Patent family member(s) | | | Publication date<br>(day/month/year) |
|---|---|---|---|---|---|---|---|
| CN | 117298600 | A | 29 December 2023 | None | | | |
| CN | 104967813 | A | 07 October 2015 | None | | | |
| CN | 101753244 | A | 23 June 2010 | None | | | |
| CN | 102316499 | A | 11 January 2012 | WO | 2012003771 | A1 | 12 January 2012 |
| CN | 105490933 | A | 13 April 2016 | None | | | |
| CN | 108319974 | A | 24 July 2018 | None | | | |
| CN | 110418170 | A | 05 November 2019 | None | | | |
| CN | 111107440 | A | 05 May 2020 | None | | | |
| CN | 115767143 | A | 07 March 2023 | None | | | |
| US | 2009290487 | A1 | 26 November 2009 | US | 7864668 | B2 | 04 January 2011 |
| | | | | JP | 2009284406 | A | 03 December 2009 |
| | | | | JP | 5131029 | B2 | 30 January 2013 |
| WO | 2008097254 | A1 | 14 August 2008 | US | 2015138955 | A1 | 21 May 2015 |
| | | | | US | 9118583 | B2 | 25 August 2015 |
| | | | | US | 2012201139 | A1 | 09 August 2012 |
| | | | | US | 8570872 | B2 | 29 October 2013 |
| | | | | US | 2018097853 | A1 | 05 April 2018 |
| | | | | US | 10560494 | B2 | 11 February 2020 |
| | | | | CA | 2656409 | A1 | 10 January 2008 |
| | | | | CA | 2656409 | C | 11 August 2015 |
| | | | | IL | 196285 | A0 | 22 September 2009 |
| | | | | IL | 196285 | A | 24 September 2015 |
| | | | | CA | 2656552 | A1 | 14 August 2008 |
| | | | | CA | 2656552 | C | 19 April 2016 |
| | | | | US | 2015373061 | A1 | 24 December 2015 |
| | | | | US | 9838440 | B2 | 05 December 2017 |
| | | | | IL | 196283 | A0 | 22 September 2009 |
| | | | | IL | 196283 | A | 30 September 2013 |
| | | | | US | 2008005156 | A1 | 03 January 2008 |
| | | | | US | 7765294 | B2 | 27 July 2010 |
| | | | | US | 2008002676 | A1 | 03 January 2008 |
| | | | | US | 8477614 | B2 | 02 July 2013 |
| | | | | CA | 2656412 | A1 | 13 March 2008 |
| | | | | CA | 2656412 | C | 28 April 2015 |
| | | | | US | 2014043977 | A1 | 13 February 2014 |
| | | | | US | 9154634 | B2 | 06 October 2015 |
| | | | | US | 2015326732 | A1 | 12 November 2015 |
| | | | | US | 9549004 | B2 | 17 January 2017 |
| | | | | US | 2013294243 | A1 | 07 November 2013 |
| | | | | US | 8976665 | B2 | 10 March 2015 |
| | | | | US | 2008002716 | A1 | 03 January 2008 |
| | | | | US | 8184549 | B2 | 22 May 2012 |
| | | | | IL | 196284 | A0 | 22 September 2009 |
| | | | | IL | 196284 | A | 30 September 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311423625